(19) **Europäisches Patentamt / European Patent Office / Office européen des brevets**

(11) **EP 4 598 212 A1**

(12) **EUROPEAN PATENT APPLICATION**
published in accordance with Art. 153(4) EPC

(43) Date of publication:
06.08.2025  Bulletin 2025/32

(21) Application number: 23872885.1

(22) Date of filing: 14.09.2023

(51) International Patent Classification (IPC):
$H04W\ 72/23^{(2023.01)}$    $H04W\ 24/08^{(2009.01)}$
$H04L\ 1/00^{(2006.01)}$    $H04L\ 5/00^{(2006.01)}$
$H04W\ 72/12^{(2023.01)}$    $H04L\ 27/26^{(2006.01)}$

(52) Cooperative Patent Classification (CPC):
H04L 1/00; H04L 5/00; H04L 27/26; H04W 24/08;
H04W 72/12; H04W 72/23

(86) International application number:
PCT/KR2023/013828

(87) International publication number:
WO 2024/071766 (04.04.2024 Gazette 2024/14)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 29.09.2022  KR 20220124775
04.11.2022  KR 20220146545

(71) Applicant: LG Electronics Inc.
Yeongdeungpo-gu
Seoul 07336 (KR)

(72) Inventors:
• CHOI, Seunghwan
  Seoul 06772 (KR)
• YANG, Suckchel
  Seoul 06772 (KR)
• KIM, Seonwook
  Seoul 06772 (KR)

(74) Representative: Plasseraud IP
104 Rue de Richelieu
CS92104
75080 Paris Cedex 02 (FR)

(54) **METHOD AND DEVICE FOR MONITORING SIGNALS IN WIRELESS COMMUNICATION SYSTEM**

(57)    METHOD AND DEVICE FOR MONITORING SIGNALS IN WIRELESS COMMUNICATION SYSTEM
The present specification discloses a criterion for counting the number of PDCCH candidates and the number of corresponding non-overlapping CCEs when monitoring the PDCCH candidates on a scheduling cell in order to detect DCI.

【Fig. 4】

EP 4 598 212 A1

**Description**

[Technical Field]

The present disclosure relates to a method and apparatus for use in a wireless communication system.

[Background Art]

Generally, a wireless communication system is developing to diversely cover a wide range to provide such a communication service as an audio communication service, a data communication service and the like. The wireless communication is a sort of a multiple access system capable of supporting communications with multiple users by sharing available system resources (e.g., bandwidth, transmit power, etc.). For example, the multiple access system may include one of code division multiple access (CDMA) system, frequency division multiple access (FDMA) system, time division multiple access (TDMA) system, orthogonal frequency division multiple access (OFDMA) system, single carrier frequency division multiple access (SC-FDMA) system, and the like.

[Disclosure]

[Technical Problem]

An object of the present disclosure is to provide a signal monitoring method for efficiently monitoring a control signal in a wireless communication system and apparatus therefor.
It will be appreciated by persons skilled in the art that the objects that could be achieved with the present disclosure are not limited to what has been particularly described hereinabove and the above and other objects that the present disclosure could achieve will be more clearly understood from the following detailed description.

[Technical Solution]

The present disclosure provides a method and apparatus for monitoring a signal in a wireless communication system.
In one aspect of the present disclosure, a method of transmitting and receiving signals by a user equipment (UE) in a wireless communication system may include configuring one or more scheduled cell sets based on radio resource control (RRC) parameters, receiving downlink control information (DCI) used to schedule a plurality of channels in a plurality of cells to include one channel per cell, the DCI including information indicating a specific scheduled cell set among the one or more scheduled cell sets, and transmitting or receiving the plurality of channels on all or some of the cells included in the specific scheduled cell set.
In another aspect of the present disclosure, a method of transmitting or receiving signals by a base station (BS) in a wireless communication system may include transmitting radio resource control (RRC) parameters for configuring one or more scheduled cell sets, transmitting downlink control information (DCI) used to schedule a plurality of channels in a plurality of cells to include one channel per cell, the DCI including information indicating a specific scheduled cell set among the one or more scheduled cell sets, and transmitting or receiving the plurality of channels on all or some of the cells included in the specific scheduled cell set.
In other aspects of the present disclosure, an apparatus, a processor and a storage medium for performing the signal monitoring method are provided.
The communication apparatus may include an autonomous driving vehicle communicable with at least a UE, a network, and another autonomous driving vehicle other than the communication apparatus.
The above-described aspects of the present disclosure are only some of the preferred embodiments of the present disclosure, and various embodiments reflecting the technical features of the present disclosure may be derived and understood from the following detailed description of the present disclosure by those skilled in the art.

[Advantageous Effects]

According to an embodiment of the present disclosure, when communication devices monitor control signals, the communication devices may perform more efficient signal monitoring based on operations different from those in the prior art.
It will be appreciated by persons skilled in the art that the effects that can be achieved with the present disclosure are not limited to what has been particularly described hereinabove and other advantages of the present disclosure will be more clearly understood from the following detailed description taken in conjunction with the accompanying drawings.

[Description of Drawings]

FIG. 1 illustrates a radio frame structure.
FIG. 2 illustrates a resource grid during the duration of a slot.
FIG. 3 illustrates a self-contained slot structure.
FIG. 4 is diagrams for explaining a signal monitoring method according to an embodiment of the present disclosure.
FIGS. 5 to 8 illustrate devices according to an embodiment of the present disclosure.

[Mode for Disclosure]

The following technology may be used in various wireless access systems such as code division multiple access (CDMA), frequency division multiple access (FDMA), time division multiple access (TDMA), orthogonal frequency division multiple access (OFDMA), single carrier frequency division multiple access (SC-FDMA), and so on. CDMA may be implemented as a radio technology such as universal terrestrial radio access (UTRA) or CDMA2000. TDMA may be implemented as a radio technology such as global system for mobile communications (GSM)/general packet radio service (GPRS)/enhanced data rates for GSM evolution (EDGE). OFDMA may be implemented as a radio technology such as institute of electrical and electronics engineers (IEEE) 802.11 (wireless fidelity (Wi-Fi)), IEEE 802.16 (worldwide interoperability for microwave access (WiMAX)), IEEE 802.20, evolved UTRA (E-UTRA), and so on. UTRA is a part of universal mobile telecommunications system (UMTS). 3rd generation partnership project (3GPP) long term evolution (LTE) is a part of evolved UMTS (E-UMTS) using E-UTRA, and LTE-advanced (LTE-A) is an evolution of 3GPP LTE. 3GPP new radio or new radio access technology (NR) is an evolved version of 3GPP LTE/LTE-A.
For clarity of description, the present disclosure will be described in the context of a 3GPP communication system (e.g., LTE and NR), which should not be construed as limiting the spirit of the present disclosure. LTE refers to a technology beyond 3GPP technical specification (TS) 36.xxx Release 8. Specifically, the LTE technology beyond 3GPP TS 36.xxx Release 10 is called LTE-A, and the LTE technology beyond 3GPP TS 36.xxx Release 13 is called LTE-A pro. 3GPP NR is the technology beyond 3GPP TS 38.xxx Release 15. LTE/NR may be referred to as a 3GPP system. "xxx" specifies a technical specification number. LTE/NR may be generically referred to as a 3GPP system. For the background technology, terminologies, abbreviations, and so on as used herein, refer to technical specifications published before the present disclosure. For example, the following documents may be referred to.

3GPP NR

- 38.211: Physical channels and modulation
- 38.212: Multiplexing and channel coding
- 38.213: Physical layer procedures for control
- 38.214: Physical layer procedures for data
- 38.300: NR and NG-RAN Overall Description
- 38.331: Radio Resource Control (RRC) protocol specification

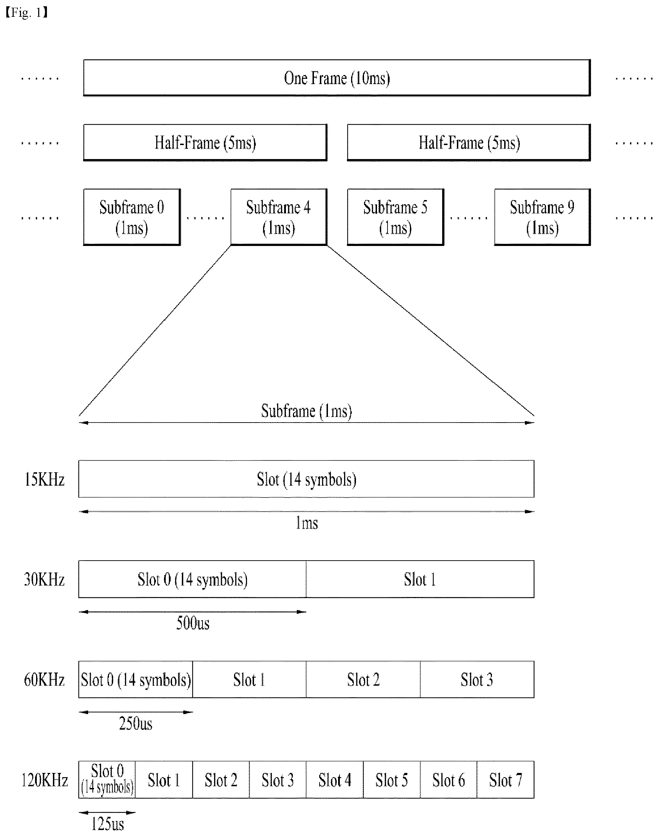

FIG. 1 illustrates a radio frame structure used for NR.
In NR, UL and DL transmissions are configured in frames. Each radio frame has a length of 10ms and is divided into two 5-ms half-frames. Each half-frame is divided into five 1-ms subframes. A subframe is divided into one or more slots, and the number of slots in a subframe depends on a subcarrier spacing (SCS). Each slot includes 12 or 14 OFDM(A) symbols according to a cyclic prefix (CP). When a normal CP is used, each slot includes 14 OFDM symbols. When an extended CP is used, each slot includes 12 OFDM symbols. A symbol may include an OFDM symbol (or a CP-OFDM symbol) and an SC-FDMA symbol (or a discrete Fourier transform-spread-OFDM (DFT-s-OFDM) symbol).
Table 1 exemplarily illustrates that the number of symbols per slot, the number of slots per frame, and the number of slots per subframe vary according to SCSs in a normal CP case.

[Table 1]

| SCS (15*2^u) | $N^{slot}_{symb}$ | $N^{frame,u}_{slot}$ | $N^{subframe,u}_{slot}$ |
|---|---|---|---|
| 15KHz (u=0) | 14 | 10 | 1 |
| 30KHz (u=1) | 14 | 20 | 2 |

(continued)

| SCS (15*2^u) | $N^{slot}_{symb}$ | $N^{frame,u}_{slot}$ | $N^{subframe,u}_{slot}$ |
|---|---|---|---|
| 60KHz (u=2) | 14 | 40 | 4 |
| 120KHz (u=3) | 14 | 80 | 8 |
| 240KHz (u=4) | 14 | 160 | 16 |
| * $N^{slot}_{symb}$: number of symbols in a slot<br>* $N^{frame,u}_{slot}$: number of slots in a frame<br>* $N^{subframe,u}_{slot}$: number of slots in a subframe | | | |

Table 2 illustrates that the number of symbols per slot, the number of slots per frame, and the number of slots per subframe vary according to SCSs in an extended CP case.

[Table 2]

| SCS (15*2^u) | $N^{slot}_{symb}$ | $N^{frame,u}_{slot}$ | $N^{subframe,u}_{slot}$ |
|---|---|---|---|
| 60KHz (u=2) | 12 | 40 | 4 |

In the NR system, different OFDM(A) numerologies (e.g., SCSs, CP lengths, and so on) may be configured for a plurality of cells aggregated for one UE. Accordingly, the (absolute time) duration of a time resource (e.g., a subframe, a slot, or a transmission time interval (TTI)) (for convenience, referred to as a time unit (TU)) composed of the same number of symbols may be configured differently between the aggregated cells.

In NR, various numerologies (or SCSs) may be supported to support various 5th generation (5G) services. For example, with an SCS of 15kHz, a wide area in traditional cellular bands may be supported, while with an SCS of 30kHz or 60kHz, a dense urban area, a lower latency, and a wide carrier bandwidth may be supported. With an SCS of 60kHz or higher, a bandwidth larger than 24.25kHz may be supported to overcome phase noise.

An NR frequency band may be defined by two types of frequency ranges, FR1 and FR2. FR1 and FR2 may be configured as described in Table 3 below. FR2 may be millimeter wave (mmW).

[Table 3]

| Frequency Range designation | Corresponding frequency range | Subcarrier Spacing |
|---|---|---|
| FR1 | 450MHz - 7125MHz | 15, 30, 60kHz |
| FR2 | 24250MHz - 52600MHz | 60, 120, 240kHz |

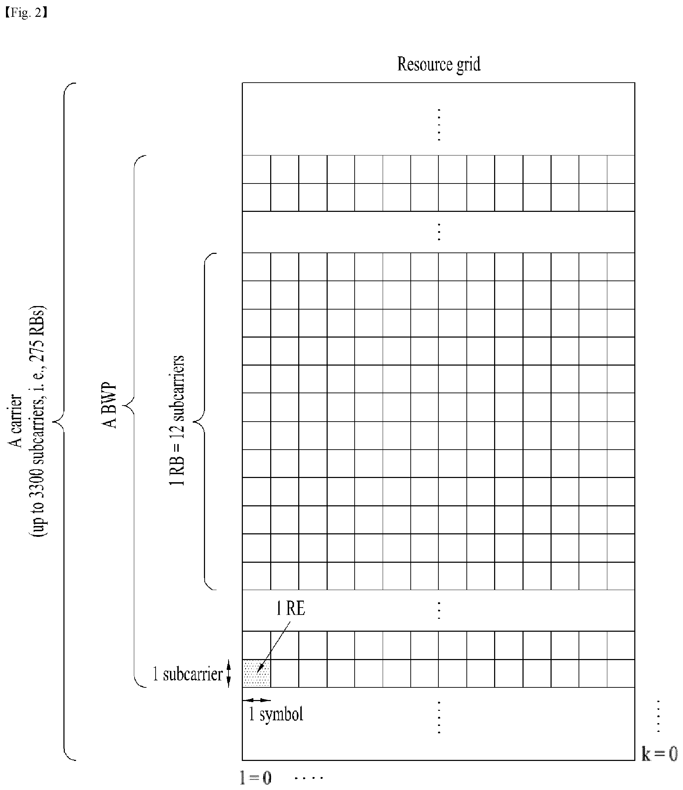

FIG. 2 illustrates a resource grid during the duration of one slot.

A slot includes a plurality of symbols in the time domain. For example, one slot includes 14 symbols in a normal CP case and 12 symbols in an extended CP case. A carrier includes a plurality of subcarriers in the frequency domain. A resource block (RB) may be defined by a plurality of (e.g., 12) consecutive subcarriers in the frequency domain. A plurality of RB interlaces (simply, interlaces) may be defined in the frequency domain. Interlace $m \in \{0, 1, ..., M-1\}$ may be composed of (common) RBs {m, M+m, 2M+m, 3M+m,...}. M denotes the number of interlaces. A bandwidth part (BWP) may be defined by a plurality of consecutive (physical) RBs ((P)RBs) in the frequency domain and correspond to one numerology (e.g., SCS, CP length, and so on). A carrier may include up to N (e.g., 5) BWPs. Data communication may be conducted in an active BWP, and only one BWP may be activated for one UE. Each element in a resource grid may be referred to as a resource element (RE), to which one complex symbol may be mapped.

In a wireless communication system, a user equipment (UE) receives information from a base station (BS) in downlink (DL), and the UE transmits information to the BS in uplink (UL). The information exchanged between the BS and UE includes data and various control information, and various physical channels/signals are present depending on the type/usage of the information exchanged therebetween. A physical channel corresponds to a set of resource elements (REs) carrying information originating from higher layers. A physical signal corresponds to a set of REs used by physical layers but does not carry information originating from the higher layers. The higher layers include a medium access control (MAC) layer, a radio link control (RLC) layer, a packet data convergence protocol (PDCP) layer, a radio resource control (RRC) layer, and so on.

DL physical channels include a physical broadcast channel (PBCH), a physical downlink shared channel (PDSCH), and a physical downlink control channel (PDCCH). DL physical signals include a DL reference signal (RS), a primary synchronization signal (PSS), and a secondary synchronization signal (SSS). The DL RS includes a demodulation reference signal (DM-RS), a phase tracking reference signal (PT-RS), and a channel state information reference signal (CSI-RS). UL physical channel include a physical random access channel (PRACH), a physical uplink shared channel (PUSCH), and a physical uplink control channel (PUCCH). UL physical signals include a UL RS. The UL RS includes a DM-RS, a PT-RS, and a sounding reference signal (SRS).

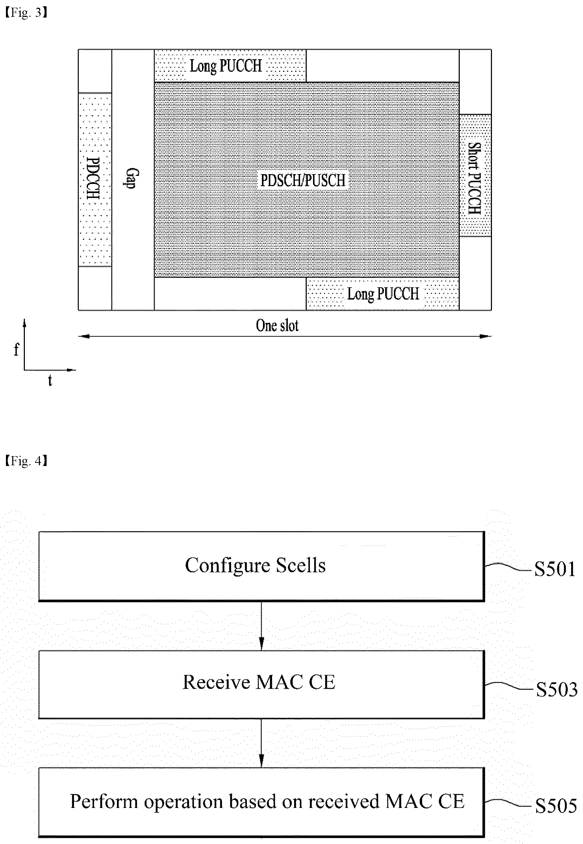

FIG. 3 illustrates a structure of a self-contained slot.

In the NR system, a frame has a self-contained structure in which a DL control channel, DL or UL data, a UL control channel, and the like may all be contained in one slot. For example, the first N symbols (hereinafter, DL control region) in the slot may be used to transmit a DL control channel, and the last M symbols (hereinafter, UL control region) in the slot may be used to transmit a UL control channel. N and M are integers greater than or equal to 0. A resource region (hereinafter, a data region) that is between the DL control region and the UL control region may be used for DL data transmission or UL data transmission. For example, the following configuration may be considered. Respective sections are listed in a temporal order.

In the present disclosure, a BS may be, for example, a gNode B (gNB).

DL Physical Channel/Signal

(1) PDSCH

A PDSCH carries DL data (e.g., DL-shared channel transport block (DL-SCH TB)). The TB is coded into a codeword (CW) and then transmitted after scrambling and modulation processes. The CW includes one or more code blocks (CBs). One or more CBs may be grouped into one code block group (CBG). Depending on the configuration of a cell, the PDSCH may carry up to two CWs. Scrambling and modulation may be performed for each CW, and modulation symbols generated from each CW may be mapped to one or more layers. Each layer may be mapped to resources together with a DMRS after precoding and transmitted on a corresponding antenna port. The PDSCH may be dynamically scheduled by a PDCCH (dynamic scheduling). Alternatively, the PDSCH may be semi-statically scheduled based on higher layer (e.g., RRC) signaling (and/or Layer 1 (L1) signaling (e.g., PDCCH)) (configured scheduling (CS)). Therefore, in the dynamic scheduling, PDSCH transmission is accompanied by the PDCCH, whereas in the CS, PDSCH transmission may not be accompanied by the PDCCH. The CS may include semi-persistent scheduling (SPS).

(2) PDCCH

A PDCCH carries Downlink Control Information (DCI). For example, the PDCCH (i.e., DCI) may carry: transmission formats and resource allocation of a DL-SCH; frequency/time resource allocation information on an uplink shared channel (UL-SCH); paging information on a paging channel (PCH); system information on a DL-SCH; time/frequency resource allocation information on a higher layer control message such as a random access response (RAR) transmitted over a PDSCH; transmit power control commands; and information on activation/deactivation of SPS/CS. Various DCI formats may be provided depending on information in DCI.

Table 4 shows DCI formats transmitted over the PDCCH.

[Table 4]

| DCI format | Usage |
|---|---|
| 0_0 | Scheduling of PUSCH in one cell |
| 0_1 | Scheduling of one or multiple PUSCH in one cell, or indicating downlink feedback information for configured grant PUSCH (CG-DFI) |
| 1_0 | Scheduling of PDSCH in one cell |
| 1_1 | Scheduling of PDSCH in one cell, and/or triggering one shot HARQ-ACK codebook feedback |
| 2_0 | Notifying a group of UEs of the slot format, available RB sets, COT duration and search space set group switching |
| 2_1 | Notifying a group of UEs of the PRB(s) and OFDM symbol(s) where UE may assume no transmission is intended for the UE |
| 2_2 | Transmission of TPC commands for PUCCH and PUSCH |
| 2_3 | Transmission of a group of TPC commands for SRS transmissions by one or more UEs |

DCI format 0_0 may be used to schedule a TB-based (or TB-level) PUSCH, and DCI format 0_1 may be used to schedule a TB-based (or TB-level) PUSCH or a CBG-based (or CBG-level) PUSCH. DCI format 1_0 may be used to schedule a TB-based (or TB-level) PDSCH, and DCI format 1_1 may be used to schedule a TB-based (or TB-level) PDSCH or a CBG-based (or CBG-level) PDSCH (DL grant DCI). DCI format 0_0/0_1 may be referred to as UL grant DCI or UL scheduling information, and DCI format 1_0/1_1 may be referred to as DL grant DCI or UL scheduling information. DCI format 2_0 may be used to provide dynamic slot format information (e.g., dynamic SFI) to the UE, and DCI format 2_1 may be used to provide downlink pre-emption information to the UE. UEs defined as one group may be provided with DCI format 2_0 and/or DCI format 2_1 over a group common PDCCH, which is a PDCCH defined for a group of UEs.

The PDCCH/DCI may include a cyclic redundancy check (CRC), and the CRC may be masked/scrambled with various identifiers (e.g., radio network temporary identifier (RNTI)) according to the owner or purpose of the PDCCH. For example, if the PDCCH is for a specific UE, the CRC may be masked with a cell-RNTI (C-RNTI). If the PDCCH relates to paging, the CRC may be masked with a paging-RNTI (P-RNTI). If the PDCCH relates to system information (e.g., system information block (SIB)), the CRC may be masked with a system information RNTI (SI-RNTI). If the PDCCH relates to a random access response, the CRC may be masked with a random access-RNTI (RA-RNTI).

Table 5 shows the usage of the PDCCH and transport channels according to the type of RNTI. Here, the transport channel means a transport channel related to data carried by a PDSCH/PUSCH scheduled by the PDCCH.

[Table 5]

| RNTI | Usage | Transport Channel |
|---|---|---|
| P-RNTI | Paging and System Information change notification | PCH(Paging Channel) |
| SI-RNTI | Broadcast of System Information | DL-SCH |
| RA-RNTI | Random Access Response | DL-SCH |
| Temporary C-RNTI | Contention Resolution (when no valid C-RNTI is available) | DL-SCH |
| Temporary C-RNTI | Msg3 transmission | UL-SCH |
| C-RNTI, MCS(Modulation and Coding Scheme)-C-RNTI | Dynamically scheduled unicast transmission | UL-SCH |
| C-RNTI | Dynamically scheduled unicast transmission | DL-SCH |
| MCS-C-RNTI | Dynamically scheduled unicast transmission | DL-SCH |
| C-RNTI | Triggering of PDCCH ordered random access | N/A |
| CS(Configued Scheduling)-RNTI | Configured scheduled unicast transmission (activation, reactivation and retransmission) | DL-SCH, UL-SCH |
| CS-RNTI | Configured scheduled unicast transmission (deactivation) | N/A |
| TPC(Transmit Power Control)-PUCCH-RNTI | PUCCH power control | N/A |
| TPC-PUSCH-RNTI | PUSCH power control | N/A |
| TPC-SRS-RNTI | SRS trigger and power control | N/A |
| INT(Interruption)-RNTI | Indication pre-emption in DL | N/A |
| SFI(Slot Format Indication)-RNTI | Slot Format Indication on the given cell | N/A |
| SP(Semi-persistent)-CSI(Channel State Information)-RNTI | Activation of Semi-persistent CSI reporting on PUSCH | N/A |

For the PDCCH, a fixed modulation scheme may be used (e.g., quadrature phase shift keying (QPSK)). One PDCCH may include 1, 2, 4, 8, or 16 control channel elements (CCEs) depending on the aggregation level (AL). One CCE may include 6 resource element groups (REGs), and one REG may be defined by one OFDMA symbol and one (P)RB.

The PDCCH may be transmitted in a control resource set (CORESET). The CORESET corresponds to a set of physical resources/parameters used to carry the PDCCH/DCI within a BWP. For example, the CORESET may include a set of REGs with a given numerology (e.g., SCS, CP length, etc.). The CORESET may be configured by system information (e.g., MIB) or UE-specific higher layer (e.g., RRC) signaling. For example, the following parameters/information may be used to configure the CORESET. One UE may be configured with one or more CORESETs, and a plurality of CORESETs may overlap in the time/frequency domain.

- controlResourceSetId: this parameter/information indicates the identifier (ID) of the CORESET.
- frequencyDomainResources: this parameter/information indicates frequency-domain resources of the CORESET. The frequency-domain resources may be indicated by a bitmap, and each bit corresponds to an RB group (= 6 consecutive RBs). For example, the most significant bit (MSB) of the bitmap corresponds to the first RB group in the BWP. An RB group corresponding to a bit with a value of 1 may be allocated as a frequency-domain resource of the CORESET.
- duration: this parameter/information indicates time-domain resources of the CORESET. The parameter/information duration may indicate the number of consecutive OFDMA symbols included in the CORESET. For example, duration has a value of 1-3.
- cce-REG-MappingType: this parameter/information indicates a CCE-to-REG mapping type. An interleaved type and a non-interleaved type may be supported.
- precoderGranularity: this parameter/information indicates a precoder granularity in the frequency domain.
- tci-StatesPDCCH: this parameter/information indicates information (e.g., TCI-StateID) on a transmission configuration indication (TCI) state for the PDCCH. The TCI state may be used to provide a quasi-co-location (QCL) relationship between DL RS(s) in an RS set (TCI-state) and a PDCCH DMRS port.
- tci-PresentInDCI: this parameter/information indicates whether a TCI field is included in DCI.
- pdcch-DMRS-ScramblingID: this parameter/information indicates information used for initialization of a PDCCH DMRS scrambling sequence.

For PDCCH reception, the UE may monitor (e.g., blind decoding) a set of PDCCH candidates in the CORESET. The PDCCH candidate may mean CCE(s) monitored by the UE for PDCCH reception/detection. PDCCH monitoring may be performed in one or more CORESETs in an active DL BWP on each active cell in which the PDCCH monitoring is configured. The set of PDCCH candidates monitored by the UE may be defined as a PDCCH search space (SS) set. The SS set may be classified into a common search space (CSS) set or a UE-specific search space (USS) set.

Table 6 shows PDCCH search spaces.

[Table 6]

| Search Space | Type | RNTI | Use Case |
|---|---|---|---|
| Type0-PDCCH | Common | SI-RNTI on a primary cell | Broadcast of System Information |
| Type0A-PDCCH | Common | SI-RNTI on a primary cell | Broadcast of System Information |
| Type1-PDCCH | Common | RA-RNTI or TC-RNTI on a primary cell | Msg2, Msg4 in RACH |
| Type2-PDCCH | Common | P-RNTI on a primary cell | Paging System Information change notification |
| Type3-PDCCH | Common | INT-RNTI, SFI-RNTI, TPC-PUSCH-RNTI, TPC-PUCCH-RNTI, TPC-SRS-RNTI, C-RNTI, MCS-C-RNTI or CS-RNTI | Group signaling |
| UE Specific | UE Specific | C-RNTI, MCS-C-RNTI or CS-RNTI | UE signaling (e.g., PDSCH/PUSCH) |

The SS set may be configured by system information (e.g., MIB) or UE-specific higher layer (e.g., RRC) signaling. S (e.g., 10) SS sets or less may be configured in each DL BWP of a serving cell. For example, the following parameters/information may be provided for each SS set. Each SS set may be associated with one CORESET, and each CORESET configuration may be associated with one or more SS sets.

- searchSpaceId: this parameter/information indicates the ID of the SS set.
- controlResourceSetId: this parameter/information indicates the CORESET associated with the SS set.
- monitoringSlotPeriodicityAndOffset: this parameter/information indicates a PDCCH monitoring periodicity (in a unit of slot) and a PDCCH monitoring offset (in a unit of slot)

- monitoringSymbolsWithinSlot: this parameter/information indicates first OFDMA symbol(s) for PDCCH monitoring in a slot in which the PDCCH monitoring is configured. The first OFDMA symbol(s) are indicated by a bitmap, and each bit corresponds to each OFDMA symbol in the slot. The MSB of the bitmap corresponds to the first OFDM symbol in the slot. OFDMA symbol(s) corresponding to bit(s) with a value of 1 corresponds to the first symbol(s) in the CORESET in the slot.
- nrofCandidates: this parameter/information indicates the number of PDCCH candidates (e.g., one of 0, 1, 2, 3, 4, 5, 6, and 8) for each AL (where AL={1, 2, 4, 8, 16}).
- searchSpaceType: this parameter/information indicates whether the SS type is the CSS or USS.
- DCI format: this parameter/information indicates the DCI format of a PDCCH candidate.

The UE may monitor PDCCH candidates in one or more SS sets in a slot according to the configuration of the CORESET/SS set. An occasion (e.g., time/frequency resource) to monitor PDCCH candidates is defined as a PDCCH (monitoring) occasion. One or more PDCCH (monitoring) occasions may be configured within a slot.

### DCI for scheduling PDSCHs or PUSCHs on multiple serving cells

The above contents are applicable in combination with methods proposed in the present disclosure, which will be described later. Alternatively, the contents may clarify the technical features of the methods proposed in the present disclosure.

In addition, the following methods may be equally applied to the above-described NR system or shared spectrum (licensed bands). Thus, it is obvious that the terms, expressions, and structures in this document may be modified to be suitable for the system in order to implement the technical idea of the present disclosure in the corresponding system.

In Rel-18, to reduce DCI overhead required for PDSCH/PUSCH scheduling, in Rel-18 in a carrier aggregation (CA) scenario where a plurality of cells are configured, a multi-cell scheduling (multi-CC scheduling) method of scheduling multiple serving cells/CCs simultaneously with a single piece of DCI may be considered (based on the justification shown in Table 7). In the present disclosure, the expression 'scheduling of multiple cells' may be understood as 'scheduling of a PDSCH or PUSCH to be transmitted in each of multiple cells.' In other words, multi-cell DCI is DCI used to schedule PDSCHs or PUSCHs on different cells.

Table 7 may be understood as a justification for supporting such DCI in Rel-18, serving as one of the motivations for the introduction of the DCI (PDCCH).

[Table 7]

| Excerpted from RP-220834 |
|---|
| NR supports a wide range of spectrum in different frequency ranges. It is expected that there will be increasing availability of spectrum in the market for 5G Advanced possibly due to re-farming from the bands originally used for previous cellular generation networks. Especially for low frequency FR1 bands, the available spectrum blocks tend to be more fragmented and scattered with narrower bandwidth. For FR2 bands and some FR1 bands, the available spectrum can be wider such that intra-band multi-carrier operation is necessary. To meet different spectrum needs, it is important to ensure that these scattered spectrum bands or wider bandwidth spectrum can be utilized in a more spectral/power efficient and flexible manner, thus providing higher throughput and decent coverage in the network. |
| One motivation is to increase flexibility and spectral/power efficiency on scheduling data over multiple cells including intra-band cells and inter-band cells. The current scheduling mechanism only allows scheduling of single cell PUSCH/PDSCH per a scheduling DCI. With more available scattered spectrum bands or wider bandwidth spectrum, the need of simultaneous scheduling of multiple cells is expected to be increasing. To reduce the control overhead, it is beneficial to extend from single-cell scheduling to multi-cell PUSCH/PDSCH scheduling with a single scheduling DCI. Meanwhile, trade-off between overhead saving and scheduling restriction has to be taken into account. |

Accordingly, the present disclosure proposes a method for monitoring a PDCCH for DCI (multi-cell DCI) for performing the multi-cell scheduling as well as a method for configuring associated PDCCH candidates.

In the proposed methods described below, for convenience of explanation, DCI for performing multi-cell scheduling is denoted as m-cc DCI, and DCI for performing conventional single-cell scheduling is denoted as s-cc DCI. In addition, DCI scheduling a PDSCH and DCI scheduling a PUSCH are collectively referred to as m-cc DCI or s-cc DCI without differentiation. In some cases, the scheduled PDSCH and/or PUSCH may be referred to as a PDSCH/PUSCH (or PxSCH).

In the present disclosure, the term 'cell' may be interpreted according to the context. For example, a cell may refer to a serving cell. In addition, a cell may be composed of one DL component carrier (CC) and one to two UL CCs, but the methods described later are not limited to this configuration. In the following, unless otherwise specified, the terms 'cell' and 'CC' may be used interchangeably. Also, a cell/CC may be substituted and applied as an (active) BWP within a serving cell. Furthermore, unless otherwise specified, the term 'cell/CC' in the methods described later may be used as a concept encompassing a primary cell (PCell), a secondary cell (SCell), primary SCell (PSCell), etc., which may be configured/expressed in CA/DC (dual connectivity) scenarios.

A cell (or CC) that schedules a PDSCH/PUSCH (DL assignment or UL grant) may be referred to as a scheduling cell (or scheduling CC). A cell where the PDSCH/PUSCH scheduled through the scheduling cell is actually transmitted may be referred to as a scheduled cell (or scheduled CC). When the scheduling cell and the scheduled cell are the same, it is called self-carrier scheduling, and when the scheduling cell and the scheduled cell are different, it is referred to as cross-carrier scheduling.

Tables 8 and 9 illustrate information elements (IEs) related to cross-carrier scheduling specified in 3GPP TS 38.331.

[Table 8]

```
–           CrossCarrierSchedulingConfig
The IE CrossCarrierSchedulingConfig is used to specify the configuration when the cross-carrier scheduling is used in a cell.
                        CrossCarrierSchedulingConfig information element

-- ASN1START
-- TAG-CROSSCARRIERSCHEDULINGCONFIG-START

CrossCarrierSchedulingConfig ::=        SEQUENCE {
    schedulingCellInfo              CHOICE {
        own                         SEQUENCE {          -- Cross carrier scheduling: scheduling cell
            cif-Presence                BOOLEAN
        },
        other                       SEQUENCE {          -- Cross carrier scheduling: scheduled cell
            schedulingCellId            ServCellIndex,
            cif-InSchedulingCell        INTEGER (1..7)
        }
    },
    ...,
    [[
    carrierIndicatorSize-r16        SEQUENCE {
        carrierIndicatorSizeDCI-1-2-r16     INTEGER (0..3),
        carrierIndicatorSizeDCI-0-2-r16     INTEGER (0..3)
    }                                       OPTIONAL,  -- Cond CIF-PRESENCE
    enableDefaultBeamForCCS-r16     ENUMERATED {enabled}            OPTIONAL  -- Need S
    ]],
    [[
    ccs-BlindDetectionSplit-r17     ENUMERATED {oneSeventh, threeFourteenth, twoSeventh, threeSeventh,
                        oneHalf, fourSeventh, fiveSeventh, spare1}    OPTIONAL  -- Need R
    ]]
}

-- TAG-CROSSCARRIERSCHEDULINGCONFIG-STOP
-- ASN1STOP
```

[Table 9]

| CrossCarrierSchedulingConfig field descriptions |
| --- |
| cif-Presence<br>The field is used to indicate whether carrier indicator field is present (value true) or not (value false) in PDCCH DCI formats, see TS 38.213 [13]. If cif-Presence is set to true, the CIF value indicating a grant or assignment for this cell is 0. |
| cif-InSchedulingCell |

(continued)

| |
|---|
| The field indicates the CIF value used in the scheduling cell to indicate a grant or assignment applicable for this cell, see TS 38.213 [13]. |
| other<br>Parameters for cross-carrier scheduling, i.e., a serving cell is scheduled by a PDCCH on another (scheduling) cell. The network configures this field only for SCells. |
| own<br>Parameters for self-scheduling, i.e., a serving cell is scheduled by its own PDCCH. |
| schedulingCellId<br>Indicates which cell signals the downlink allocations and uplink grants, if applicable, for the concerned SCell. In case the UE is configured with DC, the scheduling cell is part of the same cell group (i.e. MCG or SCG) as the scheduled cell. |

In the NR system, a cross-carrier scheduling (CCS) configuration may be configured by a higher layer parameter, CrossCarrierSchedulingConfig as shown in Tables 8 and 9. For DCI that schedules a PDSCH or PUSCH (e.g., DCI format 0_1/0_2/1_1/1_2) a carrier indicator field (CIF) value is configured. This value becomes 0 for its own cell and ranges from 1 to 7 for other cells (configured by cif-InSchedulingCell). Additionally, as shown in Table 10, a configured CIF value corresponds to the value of n_CI and is used for determining PDCCH candidates. In this case, PDCCH monitoring corresponding to a search space set (SS set) configured for a scheduled cell is performed at a PDCCH monitoring occasion (MO) associated with an SS set having the same index as the SS set in a scheduling cell. In addition, the number of PDCCH candidates for each aggregation level (AL) configured in the SS set of the scheduled cell is inherited as it is, and the same number of PDCCH candidates is applied during PDCCH monitoring on the scheduled cell based on the corresponding SS set in the scheduling cell. The PDCCH MO may be determined for each SS set s within a CORESET p. Up to 10 SS sets may be associated with a single CORESET, and each SS set may be identified by the SS set index.

[Table 10]

| |
|---|
| For each DL BWP configured to a UE in a serving cell, the UE is provided by higher layers with $S \leq 10$ search space sets where, for each search space set from the $S$ search space sets, the UE is provided the following by *SearchSpace*:<br><br>    - a PDCCH monitoring periodicity of $k_s$ slots and a PDCCH monitoring offset of $o_s$ slots, by *monitoringSlotPeriodicityAndOffset* or by *monitoringSlotPeriodicityAndOffset-r17*<br><br>    - a PDCCH monitoring pattern within a slot, indicating first symbol(s) of the CORESET for PDCCH monitoring within each slot where the UE monitors PDCCH, by *monitoringSymbolsWithinSlot*<br><br>    - a duration of $T_S < k_S$ indicating a number of slots that the search space set *s* exists by *duration,* or a number of slots in consecutive groups of slots where the search space set *s* can exist by *duration-r17* |

For each DL BWP configured to a UE in a serving cell, the UE is provided by higher layers with $S \leq 10$ search space sets where, for each search space set from the $S$ search space sets, the UE is provided the following by *SearchSpace:*

A UE determines a PDCCH monitoring occasion on an active DL BWP from the PDCCH monitoring periodicity, the PDCCH monitoring offset, and the PDCCH monitoring pattern within a slot. If *monitoringSlotsWithinSlotGroup* is not provided, the UE determines that PDCCH monitoring occasions exist in a slot with number $n_{s,f}^{\mu}$ [4, TS 38.211] in a frame with number $n_f$ if $(n_f \, N_{slot}^{frame,\mu} + n_{s,f}^{\mu} - o_s) \bmod k_s = 0$. The UE monitors PDCCH candidates for search space set $s$ for $T_s$ consecutive slots, starting from slot $n_{s,f}^{\mu}$, and does not monitor PDCCH candidates for search space set $s$ for the next $k_s - T_s$ consecutive slots. If *monitoringSlotsWithinSlotGroup* is provided, for search space set $s$, the UE determines that the slot with number $n_{s,f}^{\mu}$ [4, TS 38.211] in a frame with number $n_f$ satisfying $(n_f \, N_{slot}^{frame,\mu} + n_{s,f}^{\mu} - o_s) \bmod k_s = 0$ is the first slot in a first group of $L_s$ slots and that PDCCH monitoring occasions exist in $T_s/L_s$ consecutive groups of slots starting from the first group, where $L_s$ is the size of *monitoringSlotsWithinSlotGroup.* The UE monitors PDCCH candidates for search space set $s$ within each of the $T_s/L_s$ consecutive groups of slots according to *monitoringSlotsWithinSlotGroup,* starting from slot $n_{s,f}^{\mu}$, and does not monitor PDCCH candidates for search space set $s$ for the next $k_s - T_s$ consecutive slots.

For a search space set $s$ associated with CORESET $p$, the CCE indexes for aggregation level $L$ corresponding to PDCCH candidate $m_{s,n_{CI}}^{(L)}$ of the search space set in slot $n_{s,f}^{\mu}$ for an active DL BWP of a serving cell corresponding to carrier indicator field value $n_{CI}$ are given by

$$L \cdot \left\{ \left( Y_{p,n_{s,f}^{\mu}} + \left\lfloor \frac{m_{s,n_{CI}}^{(L)} \cdot N_{\mathrm{CCE},p}}{L \cdot M_{s,\max}^{(L)}} \right\rfloor + n_{CI} \right) \bmod \left\lfloor N_{\mathrm{CCE},p}/L \right\rfloor \right\} + i$$

where

for any CSS, $Y_{p,n_{s,f}^{\mu}} = 0$ ;

for a USS, $Y_{p,n_{s,f}^{\mu}} = \left( A_p \cdot Y_{p,n_{s,f}^{\mu}-1} \right) \bmod D$ , $Y_{p,-1} = n_{\mathrm{RNTI}} \neq 0$, $A_p = 39827$ for $p \bmod 3 = 0$, $A_p = 39829$ for $p \bmod 3 = 1$, $A_p = 39839$ for $p \bmod 3 = 2$, and $D = 65537$;

$i = 0, \cdots, L - 1$;

$N_{\mathrm{CCE},p}$ is the number of CCEs, numbered from 0 to $N_{\mathrm{CCE},p} - 1$, in CORESET $p$ and, if any, per RB set;

$n_{CI}$ is the carrier indicator field value if the UE is configured with a carrier indicator field by *CrossCarrierScheduling-Config* for the serving cell on which PDCCH is monitored, except for scheduling of the serving cell from the same serving cell in which case $n_{CI} = 0$; otherwise, including for any CSS, $n_{CI} = 0$;

$m_{s,n_{CI}}^{(L)} = 0, \cdots, M_{s,n_{CI}}^{(L)} - 1$ , where $M_{s,n_{CI}}^{(L)}$ is the number of PDCCH candidates the UE is configured to monitor for aggregation level $L$ of a search space set $s$ for a serving cell corresponding to $n_{CI}$;

---

for any CSS, $M_{s,\max}^{(L)} = M_{s,0}^{(L)}$ ;

for a USS, $M_{s,\max}^{(L)}$ is the maximum of $M_{s,n_{CI}}^{(L)}$ over all configured $n_{CI}$ values for a CCE aggregation level $L$ of search space set $s$ ;

the RNTI value used for $n_{\mathrm{RNTI}}$ is the C-RNTI.

For example, SS set #s may be configured as follows for cell #1 and cell #2.

- SS set #s configured for cell #1: The number of PDCCH candidates for a specific AL n is set to N_1(n).

- SS set #s configured for cell #2: The number of PDCCH candidates for a specific AL n is set to N_2(n).

In this case, if cross-carrier scheduling is configured such that cell #1 is determined as the scheduling cell for cell #2, the UE may perform monitoring of PDCCHs at the PDCCH MOs configured in SS set #s on cell #1 as follows. Specifically, a PDCCH transmitted on cell #1 may schedule data transmitted on cell #2 (e.g., PDSCH or PUSCH). The relationship established between cell #1 and cell #2 as described above may conveniently be referred to as a CCS relationship. Additionally, monitoring PDCCHs may imply monitoring PDCCH candidates.

- For DCI formats configured in SS set #s of cell #1, N_1(n) PDCCH candidates are monitored for each AL n.
- For DCI formats configured in SS set #s of cell #2, N_2(n) PDCCH candidates are monitored for each AL n.

For the methods described below, the proposed/calculated values in each method (e.g., the number of PDCCH candidates for each scheduled cell, blind detection (BD) counting method, BD budget, or multiplication or division of a specific value to apply weights) may result in integer values as the final results using the ceil or floor functions (unless otherwise specified)

In a scenario such as a CA composed of N cells (cell#1 to cell#N, where N is an integer greater than or equal to 1), when a linkage relationship (e.g., an SS linkage or CCS relationship) between a scheduling cell and a scheduled cell (which is scheduled at the same time through m-cc DCI in the scheduling cell) is established, at least one of the following proposed methods may be configured/applied.

In the methods proposed below, the N cells may be interpreted as a full set of all scheduled cells that may be scheduled through m-cc DCI (for simplicity). The N cells may be indicated as {cell#n} or represented as a full-set. The set of scheduled cells (or co-scheduled cells) that are scheduled simultaneously through the m-cc DCI is represented as K cells. The K cells may be indicated as {cell#k} or represented as a co-set. For one m-cc DCI, one full-set may be configured/established, and (one or) multiple different co-sets may be configured/established. In this case, {cell#n} and/or {cell#k} may or may not include scheduling cells of the m-cc DCI.

In the proposed method described below, the m-cc DCIs may be separated into DCI (format) 1_X (for scheduling PDSCH) and DCI (format) 0_X (for scheduling PUSCH), as needed. For example, the DCI for scheduling PDSCH may be represented as DCI format 1_3 and the DCI for scheduling PUSCH may be represented as DCI format 0_3.

**[1] Configuring DCI format for m-cc DCI**

[1-1] When the search space (SS) is configured as a UE specific SS (USS), the UE may receive, through the "dci-Formats' field of the RRC parameter SearchSpace, an indication of the DCI format for the PDCCH candidate to be monitored by the UE. Table 11 and Table 12 show example search space settings.

[Table 11]

| |
|---|
| Excerpted from 38.213, section 10.1<br>- If search space set s is a USS set, an indication by dci-Formats to monitor PDCCH candidates either for DCI format 0_0 and DCI format 1_0, or for DCI format 0_1 and DCI format 1_1, or an indication by dci-FormatsExt to monitor PDCCH candidates for DCI format 0_2 and DCI format 1_2, or for DCI format 0_1, DCI format 1_1, DCI format 0_2, and DCI format 1_2, or an indication by dci-FormatsSL to monitor PDCCH candidates for DCI format 0_0 and DCI format 1_0, or |
| for DCI format 0_1 and DCI format 1_1, or for DCI format 3_0, or for DCI format 3_1, or for DCI format 3_0 and DCI format 3_1 |

[Table 12]

```
searchSpaceType               CHOICE {
    common                    SEQUENCE {
        dci-Format0-0-AndFormat1-0        SEQUENCE {
        ...
        }                                         OPTIONAL,  -- Need R
        dci-Format2-0             SEQUENCE {
            nrofCandidates-SFI           SEQUENCE {
                aggregationLevel1            ENUMERATED {n1, n2}              OPTIONAL,  -- Need R
                aggregationLevel2            ENUMERATED {n1, n2}              OPTIONAL,  -- Need R
                aggregationLevel4            ENUMERATED {n1, n2}              OPTIONAL,  -- Need R
                aggregationLevel8            ENUMERATED {n1, n2}              OPTIONAL,  -- Need R
                aggregationLevel16            ENUMERATED {n1, n2}              OPTIONAL   -- Need R
            },
        ...
        }                                         OPTIONAL,  -- Need R
        dci-Format2-1             SEQUENCE {
        ...
        }                                         OPTIONAL,  -- Need R
        dci-Format2-2             SEQUENCE {
        ...
        }                                         OPTIONAL,  -- Need R
        dci-Format2-3             SEQUENCE {
            dummy1                    ENUMERATED {sl1, sl2, sl4, sl5, sl8, sl10, sl16, sl20}  OPTIONAL,  -- Cond
Setup
            dummy2                    ENUMERATED {n1, n2},
        ...
        }                                         OPTIONAL   -- Need R
    },
    ue-Specific               SEQUENCE {
        dci-Formats                   ENUMERATED {formats0-0-And-1-0, formats0-1-And-1-1},
        ...,
        [[
        dci-Formats-MT-r16            ENUMERATED {formats2-5}                OPTIONAL,  -- Need R
        dci-FormatsSL-r16             ENUMERATED {formats0-0-And-1-0, formats0-1-And-1-1, formats3-0, formats3-1,
                                      formats3-0-And-3-1}              OPTIONAL,  -- Need R
        dci-FormatsExt-r16            ENUMERATED {formats0-2-And-1-2, formats0-1-And-1-1And-0-2-And-1-2}
                                                  OPTIONAL   -- Need R
        ]]
    }
  }
}
```

The DCI format for m-cc DCI may be configured using one of the following methods:

- Method 1: A method in which the PDCCH candidates of the m-cc DCI are configured to be monitored separately from the PDCCH candidates of the conventional s-cc DCI. In other words, PDCCH candidate monitoring related parameters and/or information are configured independently for each of the s-cc DCI and the m-cc DCI. The PDCCH candidate monitoring related parameters and/or information may be, for example, the number of PDCCH candidates per AL.

   ■ Opt1-1: Conventional s-cc DCI means "DCI 0_0 + DCI 1_0" or "DCI 0_1 + DCI 1_1".

      ♦ In this case, 'formats0-X-And-1-X' may be additionally defined (as an element of, for example, dci-Formats) under "UE-Specific" within "searchSpaceType" in the 3GPP 38.331 specification. In other words, the UE may be instructed to monitor PDCCH candidates for one of "DCI 0_0 + 0_1", "DCI 0_1 + 1_1", or "DCI 0_X + 1_X" through (for example) the RRC parameter dci-Formats.

   ■ Opt1-2: Conventional s-cc DCI means ("DCI 0_0 + DCI 1_0" or "DCI 0_1 + DCI 1_1" or) "DCI 0_2 + DCI 1_2" or "DCI 0_1 + DCI 1_1 + DCI 0_2 + DCI 1_2".

      ♦ In this case, "UE-Specific" within "searchSpaceType" in 3GPP 38.331 specification above may additionally have 'formats0-X-And-1-X' defined (for example, as an element of dci-FormatsExt). In other words, the UE may be instructed to monitor PDCCH candidates for one of "DCI 0_2 + 1_2", "DCI 0_1 + 1_1 + 0_2 + 1_2", or "DCI 0_X + 1_X" through (for example) the RRC parameter dci-FormatsExt.

- Method 2: A method in which the PDCCH candidates of the m-cc DCI are configured to be monitored along with the PDCCH candidates of the conventional s-cc DCI. In other words, a PDCCH candidate monitoring related parameter and/or information may be set to a common value for both the s-cc DCI and the m-cc DCI. The PDCCH candidate monitoring related parameter and/or information may be, for example, the number of PDCCH candidates for each AL.

■ Opt2-1: Conventional s-cc DCI means "DCI 0_0 + DCI 1_0" or "DCI 0_1 + DCI 1_1".

♦ In this case, "UE-Specific" within "searchSpaceType" in 3GPP 38.331 specification above may additionally have 'formats0-1-And-1-1And-0-X-And-1-X' defined (for example, as an element of dci-Formats). In other words, the UE may be instructed to monitor PDCCH candidates for one of "DCI 0_0 + 0_1", "DCI 0_1 + 1_1", or or "DCI 0_1 + 1_1 + 0_X + 1_X" through (for example) the RRC parameter dci-Formats.

■ Opt2-2: Conventional s-cc DCI means ("DCI 0_0 + DCI 1_0" or "DCI 0_1 + DCI 1_1" or) "DCI 0_2 + DCI 1_2" or "DCI 0_1 + DCI 1_1 + DCI 0_2 + DCI 1_2".

♦ In this case, "UE-Specific" within "searchSpaceType" in 3GPP 38.331 specification above may additionally have 'formats0-X-And-1-X' defined (for example, as an element of dci-FormatsExt). In other words, the UE may be instructed to monitor PDCCH candidates for one of "DCI 0_2 + 1_2", "DCI 0_1 + 1_1 + 0_2 + 1_2", or "DCI 0_1 + 1_1 + 0_2 + 1_2 + 0_X + 1_X" through (for example) the RRC parameter dci-FormatsExt.

**[2] Search space configuration for MC-DCI**

Table 13 shows suggestions related to search space configuration.

[Table 13]

| Proposal 2-8rev2: |
| --- |
| For search space configuration for a set of cells which can be co-scheduled by a DCI format 0_X/1_X, below options are considered for further study:<br>- Alt 1: Search space of the DCI format 0_X/1_X is configured on each cell of the set of cells and associated with the search space on the scheduling cell with the same search space ID.<br>- Alt 2: Search space of the DCI format 0_X/1_X is configured on a subset of the set of cells and associated with the search space on the scheduling cell with the same search space ID.<br>- Alt 3: Search space of the DCI format 0_X/1_X is configured on one cell of the set of cells and associated with the search space on the scheduling cell with the same search space ID.<br>- Alt 4: Search space of the DCI format 0_X/1_X is configured only on the scheduling cell and linked with the set of cells configured by explicit RRC signalling.<br>- Other alternatives are not precluded. |

[2-1] In the proposal below, the following assumptions are made (for simplicity). The proposed methods may be limited to these assumptions (e.g., the number of cells, the number of co-sets, co-set configurations, etc.) when applied.
For each SS index, the number of PDCCH candidates (PC) for the m-cc DCI may be set (individually for each scheduled cell). For example, when {cell#n}, which is the full set of scheduled cells for the m-cc DCI, is configured as {cell#n}={cell 1, cell 2, cell 3, cell 4}, and the co-set {cell#k}, which corresponds to a combination of cells that are co-scheduled for the m-cc DCI, configured as co-set#1={cell 1}, co-set#2={cell 1, cell 2}, and co-set#3={cell 2, cell 3, cell 4}, SS _i(j), the number of PCs for the m-cc DCI configured in scheduled cell#j for SS index#i, may be set as follows (for example). In the following, "N/A" indicates that the number of PCs (i.e., SS_i(j)) is not set.

- SS_1(1) = x1, SS_1(2) = x2, SS_1(3) = x3, SS_1(4) = x4
- SS_2(1) = y1, SS_2(2) = y2, SS_2(3) = N/A, SS_2(4) = N/A
- SS_3(1) = N/A, SS_3(2) = z2, SS_3(3) = z3, SS_3(4) = z4

[2-2] The search space (SS) configuration for m-cc DCI may be established for some (or all) cells in {cell#n}.

The SS configuration for the m-cc DCI may be established using one of the following methods.

- Alt 1A: Search space of the DCI format 0_X/1_X is configured on each cell of the full-set {cell#n} and associated with the search space on the scheduling cell with the same search space ID.

    ■ In this case, only SS_1 is configurable for m-cc DCI transmission on the scheduling cell, and SS_2 and SS_3 may not be configurable for m-cc DCI transmission (on the scheduling cell) (assuming that the number of PCs is set as in the example above).

- Alt 2A: Search space of the DCI format 0_X/1_X is configured on a subset of the full-set {cell#n} and associated with the search space on the scheduling cell with the same search space ID.

    ■ In this case, SS_1, SS_2, and SS_3 may all be configured for m-cc DCI transmission on the scheduling cell (assuming that the number of PCs is set as in the example above).

- Alt 3A: Search space of the DCI format 0_X/1_X is configured on one cell of the full-set {cell#n} and associated with the search space on the scheduling cell with the same search space ID.

    ■ In this case, (when it is assumed that the "one cell" is cell 1), SS_1 and SS_2 may be configured for m-cc DCI transmission on the scheduling cell, and SS_3 may not be configurable for m-cc DCI transmission (on the scheduling cell).

- Note: For SS_i on the scheduling cell configured for m-cc DCI transmission in Alt 1A/2A/3A above, m-cc DCI for scheduling all co-sets may be transmitted through SS_i.

When the DCI format for the m-cc DCI follows [1]-[Method 1] above, the following configuration may be established.

- SS_i(j) may be set to be the same for all scheduled cells #j. (e.g., In this case, x1, x2, x3, and x4 may all be the same.)
- In this case, the number of PCs on the scheduling cell (for the m-cc DCI) may be determined to be the value of SS_i(j) (set to be the same for multiple scheduled cells).

When the DCI format for the m-cc DCI follows [1]-[Method 2] (or [1]-[Method 1]) above, the following configuration may be established.

- SS_i(j) may be set to a (same or) different value for each scheduled cell #j. (e.g., In this case, x1, x2, x3, and x4 may all be different.)
- In this case, the number of PCs (for the m-cc DCI) set in SS_i on the scheduling cell may be determined as:

    ■ Opt 1A: the number of PCs set in a specific cell (i.e., the reference cell) among the scheduled cells (for which SS_i(j) is configured), or
    ■ Opt 2A: the sum of the numbers of PCs of all scheduled cells (for which SS_i(j) is configured); or
    ■ Opt 3A: the average or weighted sum of the numbers of PCs of all scheduled cells (for which SS_i(j) is configured).

[2-3] The SS (search space) configuration for the m-cc DCI may be established for some (or all) cells of {cell#k}.
The SS configuration for m-cc DCI may be established through one of the following methods.

- Alt 1B: Search space of the DCI format 0_X/1_X is configured on each cell of co-set {cej7j7ll#k} and associated with the search space on the scheduling cell with the same search space ID.

    ■ In this case, SS_1 on the scheduling cell is configurable for the m-cc DCI transmission for scheduling co-set#1/2/3 (assuming that the number PCs is set as in the example above). SS_2 on the scheduling cell is configurable for m-cc DCI transmission for scheduling co-set#1/2. SS_3 on the scheduling cell is configurable for m-cc DCI transmission for scheduling co-set#3.

- Alt 2B: Search space of the DCI format 0_X/1_X is configured on a subset of co-set {cell#k} and associated with the search space on the scheduling cell with the same search space ID.

■ In this case, SS_1 on the scheduling cell is configurable for m-cc DCI transmission for scheduling co-set#1/2/3, SS_2 (in the scheduling cell) is configurable for m-cc DCI transmission for scheduling co-set#1/2/3, and SS_3 (in the scheduling cell) is configurable for m-cc DCI transmission for scheduling co-set#2/3 (assuming that the number PCs is set as in the example above).

- Alt 3B: Search space of the DCI format 0_X/1_X is configured on one cell of co-set {cell#k} and associated with the search space on the scheduling cell with the same search space ID.

■ In this case, assuming that the "one cell" is cell index 1 for co-set#1/2, and assuming that the "one cell" is cell index 2 for co-set#3, SS_1 on the scheduling cell is configurable for m-cc DCI transmission for scheduling co-set#1/2/3, and SS_2 (on the scheduling cell) is configurable for m-cc DCI transmission for scheduling co-set#1/2/3, SS_2 (on the scheduling cell) might be configurable for m-cc DCI transmissions scheduling co-set#1/2/3, and SS_3 (on the scheduling cell) is configurable for m-cc DCI transmissions for scheduling co-set#3.

When the DCI format for the m-cc DCI follows [1]-[Method 1] above, the following configuration may be established.

- SS_i(j) may be set to be the same for all scheduled cells #j. (e.g., In this case, x1, x2, x3, and x4 may all be the same.)
- In this case, the number of PCs on the scheduling cell (for the m-cc DCI) may be determined to be the value of SS_i(j) (set to be the same for multiple scheduled cells). Alternatively, it may be determined as the sum or scaled sum of the numbers of PCs on all scheduled cells (in which SS is configured).
- Alternatively, in this case, the number of PCs for each co-set may be determined by scaling down for the co-sets associated with each SS_n.

When the DCI format for the m-cc DCI follows [1]-[Method 2] (or [1]-[Method 1]) above, the following configuration may be established.

- SS_i(j) may be set to a (same or) different value for each scheduled cell #j. (e.g., In this case, x1, x2, x3, and x4 may all be different.)
- In this case, the number of PCs (for the m-cc DCI) set in SS_i on the scheduling cell may be determined as:

■ Opt 1B: the number of PCs set in a specific cell (i.e., the reference cell) among the scheduled cells (for which SS_i(j) is configured); or
■ Opt 2B: the sum of the numbers of PCs of all scheduled cells (for which SS_i(j) is configured); or
■ Opt 3B: the average or weighted sum of the numbers of PCs of all scheduled cells (for which SS_i(j) is configured).

- Alternatively, in this case, for SS_i on the scheduling cell, the number of PCs (for the m-cc DCI) may be set for each of the co-sets determined to be schedulable through SS_i. In this case, the number of PCs set for a specific co-set may be determined as:

■ Opt 1C: the number of PCs set in a specific cell (i.e., the reference cell) among the scheduled cells (for which SS_i(j) is configured) belonging to the co-set; or
■ Opt 2C: the sum of the numbers of PCs of all scheduled cells (for which SS_i(j) is configured) belonging to the co-set; or
■ Opt 3C: the average (or weighted sum) of the numbers of PCs of all scheduled cells (for which SS _i(j) is configured) belonging to the co-set.

When applying Alt 1A/2A/3A/1B/2B/3B and Opt 1A/2A/3A/1B/2B/3B/1C/2C/3C described above, it may be assumed that the full-set and/or each co-set is composed of the cells except a specific invalid cell (and on this assumption, Alt 1A/2A/3A/1B/2B/3B and Opt 1A/2A/3A/1B/2B/3B and Opt 1A/2A/3A/1B/2B/3B/1C/2C/3C may be applied) I. Alternatively, even when the number of PCs is actually set for the cell, the cell may be considered/processed as a cell for which the number of PCs is not set (and Alt 1A/2A/3A/1B/2B/3B and Opt 1A/2A/3A/1B/2B/3B/1C/2C/3C may be applied). The invalid cell may correspond to a deactivated Scell, and/or a cell operating as a dormant BWP, and/or a cell operating in DRX off state (with no PDCCH monitoring) and/or a cell corresponding to a specific time duration (or a specific BWP) that is configured/indicated to start a series of transmission/reception operations for the purpose of saving BS energy/power. When an invalid cell is included in a co-scheduled co-set through m-cc DCI, PDSCH/PUSCH transmission/reception may be skipped for the invalid cell.

In order to reduce the complexity of the m-cc DCI configuration and the scheduling related operations, a constraint may be imposed that the SCSs used/applied for the cells belonging to each cell combination (co-set) being co-scheduled from the DCI should all have the same value. If the SCSs used/applied for the cells belonging to a specific co-set (or active BWPs set/indicated for each of the cells) are set to different values, PDSCH/PUSCH transmission/reception may be performed only for the cell for which a specific (valid) SCS is used in/applied, and PDSCH/PUSCH transmission/reception may be skipped for the other cells for which the (invalid) SCSs are used/applied. In this case, the cells for which the invalid SCSs are used/applied may correspond to the invalid cell above. Accordingly, the cells for which the invalid SCSs are used/applied may be considered/processed as cells for which the number of PCs (SS_i(j)) is not set.

The valid SCS may be preconfigured (e.g., an individual valid SCS value may be set for each co-scheduled cell set, or one common valid SCS value may be set for all co-scheduled cell sets) through RRC or the like, or it may be determined based on specific rules as follows.

Alt 1) The valid SCS may be determined as an SCS value used/applied for a specific cell (e.g. lowest cell index) in the co-scheduled cell set.

Alt 2) Alternatively, the valid SCS may be determined as the least/greatest value of the SCSs used/applied for the cells in the co-scheduled cell set.

Alt 3) Alternatively, the valid SCS may be determined as the SCS value used/applied for the largest number of cells among the cells in co-scheduled cell set (if there are multiple SCS values used/applied for the largest number of cells, the value determined by applying Alt 1/2 above to the multiple SCS values may be set).

## [3] Setting n_CI in the search space equation

Table 14 shows proposals related to setting of n_CI.

[Table 14]

| |
|---|
| Proposal 2-9:<br>For monitoring PDCCH candidates for a set of cells which can be co-scheduled by a DCI format 0_X/1_X, below alternatives are considered for further study:<br>- Alt 1: the n_CI in the search space equation is determined by a value configured for the set of cells.<br>- Alt 2: the n_CI in the search space equation is determined by a value configured for each combination of co-scheduled cells within the set of cells.<br>- Alt 3: the n_CI in the search space equation is determined by a value configured for one or more combinations of co-scheduled cells within the set of cells.<br>- Other alternatives are not precluded. |

[3-1] The value of n_CI described in this section may be understood as corresponding to the operation of setting the (starting) CCE position of the SS (on the scheduling cell) determined by the SS configuration method for m-cc DCI transmission in [2] above.

In the proposal below, the following assumptions are made (for simplicity). The proposed method may be applied without being limited to these assumptions (e.g., the number of cells, the number of co-sets, the co-set configuration, etc.)

- {cell#n} = {cell 1, cell 2, cell 3, cell 4}
- {cell#k} is co-set#1={cell 1}, co-set#2={cell 1, cell 2}, or co-set#3={cell 2, cell 3, cell 4}.
- The value of the carrier indicator field (CIF) for each co-set may be set as follows (as an example):

    ■ CIF = x for co-set#1
    ■ CIF = y for co-set#2
    ■ CIF = z for co-set#3

The value of n_CI may be determined by any of the following.

- Alt 1C: the n_CI in the search space equation is determined by a value configured for the full-set {cell#n}.

    ■ In this case, the value of n_CI may be determined to be the same as the value of the CIF set for one specific co-set (e.g., the reference co-set), or may be determined to be a specific value set separately (independent of the CIF).
    ■ Scheduling for any co-set may be enabled through an SS configured based on the value of n_CI determined above.

■ This method may be combined with Opt 1A/2A/3A (and Alt 1A/2A/3A), or may be combined with Opt 1B/2B/3B (and Alt 1B/2B/3B).

- Alt 2C: the n_CI in the search space equation is determined by a value configured for each co-set {cell#k} within the full-set {cell#n}.

    ■ In this case, the value of n_CI may be determined to be the same as the value of the CIF set for each co-set, or may be determined to be a specific value set separately (independent of the CIF).
    ■ Through an SS configured based on the value of n_CI determined for a specific co-set, scheduling for at least the co-set may be enabled.
    ■ This method may be combined with the above Opt 1C/2C/3C (and Alt 1B/2B/3B).

- Alt 3C: the n_CI in the search space equation is determined by a value configured for each co-set group consisting of one or more co-set(s) within the full-set.

    ■ In this case, the value of n_CI may be determined to be the same as the value of the CIF set for a specific reference co-set in each co-set group, or may be determined to be a specific value set separately.
    ■ Through an SS configured based on the value of n_CI determined for a specific co-set group, scheduling for the co-sets belonging to at least the co-set group may be enabled.
    ■ This method may be combined with the above Opt 1C/2C/3C (and Alt 1B/2B/3B).

- Alt 4C: When the sum of SS_n(k) configured on the scheduled cell is determined to be the number of PCs in SS_n on the scheduling cell based on Opt 2A (and Alt 1A/2A/3A) or Opt 2B (and Alt 1B/2B/3B), the value of n_CI for the set of PCs in SS_n corresponding to SS_n(k) may be determined to be the same as the (single-cell) CIF value set for the (scheduled) cell index k (for the conventional cross-carrier scheduling).

    ■ In this case, the scheduling of all arbitrary co-sets through each n_CI may be enabled, or at least the scheduling of a co-set to which cells with the same single-cell CIF value as n_CI belong may be enabled.

[3-2] The co-scheduled cells that are simultaneously scheduled through specific m-cc DCI may include cells that belong to a set of specific cells configured for the UE (e.g., the set of all cells configured to be schedulable through the m-cc DCI). For example, in Alt 1C of [3-1] above, some of the cells in the full-set (e.g., one or more cells in the set or all cells in the set) may be co-scheduled cells of the m-cc DCI.

[3-3] The set in [3-2] above (hereinafter referred to as a cell-set) may include up to N sets for each scheduling cell of the m-cc DCI. Alternatively, up to N sets of [3-2] may be configured for the same link direction (e.g., DL PDSCH or UL PUSCH) per scheduling cell of the m-cc DCI. N may be predefined or set through RRC. N may be reported through the UE capability. However, when multiple m-cc DCIs for scheduling different cell-sets on the same scheduling cell have the same payload size, ambiguity may occur in identifying a cell-set corresponding to a specific m-cc DCI when the UE receives the DCI. To address this issue, N=1 may be set/limited. In other words, a maximum of one cell-set may be defined/set to be configured per scheduling cell of the m-cc DCI. A maximum of one cell-set may be defined/set to be configured for the same link direction (e.g. DL PDSCH or UL PUSCH) per scheduling cell of the m-cc DCI.

- If the number of cell-sets that may be configured per scheduling cell may be set through RRC, only a maximum of one cell-set may be configured per scheduling cell when there is no RRC configuration. In this case, the cell-set may be the set of all cells configured for the UE. Alternatively, when the number of cells configured for the UE (=M_1) is greater than the number of cells that may be co-scheduled through the m-cc DCI (=M_2), M_2 cells in ascending order of the index of the configured cells may be determined as the cell-set.

[3-4] Alternatively, the case of N>1 may be allowed. When multiple cell-sets are configured for the same link direction per scheduling cell, the PDCCH MO (monitoring occasion) configured through the SS (search space) of the PDCCH for the m-cc DCI and/or the slots configured to perform PDCCH monitoring for the m-cc DCI may be defined/configured to be distinct per cell-set (independent of the SS configuration). In other words, for any two cell-sets, PDCCH MOs and/or monitoring slots do not overlap with each other, but different PDCCH MOs and/or different monitoring slots are configured. For example, an MO configured for cell-set#1 and an MO configured for cell-set#2 in a specific scheduling cell may be restricted from overlapping with each other. The UE may not expect those MOs to overlap with each other or to be positioned in the same slot.

- This restriction/conflagration may be reported through the UE capability or may be set separately through RRC.

[3-5] N>1 may be allowed. When multiple cell-sets are configured for the same link direction per scheduling cell, the PDCCH MOs of different cell-sets may be configured to be the same (i.e., to overlap with each other) on the same scheduling cell, or the PDCCH monitoring slots may be configured to be the same (i.e., to overlap with each other). In this case, the SS ID/index on which the PDCCH SS (e.g., PDCCH candidate) for the m-cc DCI is configured and/or the CORESET ID/index associated with the PDCCH SS for the m-cc DCI may be defined/configured to be distinct for each cell-set. In other words, for any two cell-sets, the SS ID/index and/or the CORESET ID/index shall not be configured in an overlapping manner, and different SS ID/indexes and/or different CORESET ID/indexes may be configured.

- This restriction/conflagration may be reported through the UE capability or may be set separately through RRC.

[3-6] N>1 may be allowed. When multiple cell-sets are configured for the same link direction per scheduling cell, the states and/or codepoints indicated through a specific field (e.g. CIF) indicating a combination of co-scheduled cells for different cell-sets on the same scheduling cell may be defined/set such that they are distinguished (i.e. do not overlap) per cell-set. In other words, for any two cell-sets, different states and/or codepoints may be indicated/used without overlapping states and/or codepoints. For example, suppose that there are two cell-sets #1 and #2, and state #0 to state #N-1 may be indicated through the specific field above. In this case, for cell-set #1, combinations of co-scheduled cells may be configured and indicated for only states #0 to #K-1. On the other hand, for cell-set #2, combinations of co-scheduled cells may be configured and indicated for only states #K to #N-1.

- This restriction/conflagration may be reported through the UE capability or may be set separately through RRC.

**[4] (DCI size counting and/or) BD counting methods**

Table 15 shows the proposals related to blind decoding (BD) counting.

[Table 15]

| (Merged)Proposal 2-6 and Proposal 2-7rev3:<br>For further study DCI size budget and BD/CCE budget for multi-cell scheduling DCI, below Option 1 is considered: |
| --- |
| - Option 1: Existing DCI size budget is maintained per scheduled cell.<br>■ Alt 1: Both DCI size and BD/CCE of DCI format 0_X/1_X are counted on each of the cells that can be potentially scheduled by DCI 0_X/1_X.<br>♦ No scaling to each co-scheduled cell<br>■ Alt 2: Both DCI size and BD/CCE of DCI format 0_X/1_X are counted only in a same cell among the cells that can be potentially scheduled by DCI 0_X/1_X.<br>■ Alt 3: Both DCI size and BD/CCE of DCI format 0_X/1_X are counted for one or more cells configured with PDCCH candidates for multi-cell scheduling among the cells that can be potentially scheduled by DCI 0_X/1_X.<br>■ Alt 4: Both DCI size and BD/CCE of DCI format 0_X/1_X are counted on the scheduling cell.<br>■ Other alternatives are not precluded |

[4-1] The BD counting method described in this section may be understood as the process of determining cells to be subject to BD counting (i.e., determining cells to be counted as cells on which BD has been performed) for the total number of PCs (corresponding to the sum of the numbers of PCs per co-set) configured for the entire SS (on the scheduling cell), as determined by the SS configuration method for m-cc DCI transmission in [2] above. The total number of PCs (N_total) may also be construed as the total number of PCs for each co-set (group) in the SS.
In the proposal below, the following assumptions are made (for simplicity). The proposed method may be applied without being limited to these assumptions (e.g., the number of cells, the number of co-sets, the co-set configuration, etc.)

- {cell#n}={cell 1, cell 2, cell 3, cell 4}
- {cell#k} is co-set#1={cell 1}, co-set#2={cell 1, cell 2}, or co-set#3={cell 2, cell 3, cell 4}.

The BD counting may be determined using one of the following methods.

- Alt 1D: BDs/CCEs of DCI format 0_X/1_X are counted on each of the cells within the full-set {cell#n}.

In this case, for all cells within the full-set or each co-set (group), as many BDs as N_total or scaled N_total (e.g. N_total / N) may be counted for each cell.

- Alt 2D: BDs/CCEs of DCI format 0_X/1_X are counted only in a cell among the cells within the full-set {cell#n}.

In this case, as many BDs as N_total may be counted for one specific cell within the full-set (or each co-set/subgroup).

The one specific cell may be determined according to a predefined rule or may be directly configured through RRC or the like.

- Alt 3D: BDs/CCEs of DCI format 0_X/1_X are counted for one or more cells configured with PDCCH candidates for multi-cell scheduling among the cells within the full-set {cell#n}.

In this case, as many BDs as N_total or scaled N_total (e.g. N_total / N) may be counted for each cell within the full-set or each co-set/subgroup (excluding the (scheduled) cells with no PC configuration in the process in [2] above).

- Alt 4D: BDs/CCEs of DCI format 0_X/1_X are counted on the scheduling cell.

    ■ In this case, as many BDs as N_total may be counted for the scheduling cell.

- Alt 5D: When the sum of SS_n(k) configured on the scheduled cell is determined to be the number of PCs in SS_n on the scheduling cell based on Opt 2A (and Alt 1A/2A/3A) or Opt 2B (and Alt 1B/2B/3B), the BD number corresponding to SS_n(k) in SS_n may be counted as BD for (scheduled) cell index k.

When a specific invalid cell (as described above) is present in applying Alt 1D/2D/3D/4D/5D described above, the cell may be excluded from the BD counting (and Alt 1D/2D/3D/4D/5D may be applied).

[4-2] The cell determination method for BD counting may be equally applied as a cell determination method for DCI size counting. For example, in the cell(s) that are configured/determined as targets of BD counting for m-cc DCI (using this method), the DCI size for m-cc DCI may also be configured/determined to be counted.

**[5] SS configuration method and DCI size and BD/CCE counting method for m-cc DCI**

[5-1] Method of configuring DCI format of SS

In Rel-15/16/17 NR, when cross-carrier scheduling (CCS) is configured, the SS of the scheduling cell linked to the scheduling cell is configured with the aggregation level (AL) and the number of PCs (i.e., the number of PDCCH candidates, nrofCandidates) for each AL. All other optional fields are absent. When a scheduling cell and a scheduled cell are linked, SSs with the same ID are configured for both cells. When the PDCCH (for scheduling PDSCH/PUSCH) for the scheduled cell is monitored on the corresponding scheduling cell, the number of PCs set in the scheduled cell is used. Among the optional fields that are absent is searchSpaceType, which is a field indicating the DCI format (=DCIF) for which the SS is configured. In other words, in the conventional CCS, the DCIF configured in the SS on the scheduling cell may be used (without setting the DCIF in the SS of the scheduled cell) to determine the DCI format for which the SS is configured.

In the case of m-cc DCI, SSs may be configured in the scheduling cell and (multiple) scheduled cells, and an SS linking relationship may be established similar to conventional CCS. In this case, the DCIF set in the SS (for the m-cc DCI format) may be defined/set using one of the following two methods.

- [Method 5-1]: For a specific SS (ID), the number of PCs per AL is set in the SS of the scheduled cell (referred to as ref-cell below) that is SS-linked to the scheduling cell, and no DCIF is set. The DCIF set in the SS of the scheduling cell is used to determine the DCI format for which the specific SS is configured. The scheduled cell SS-linked to the scheduling cell may be referred to as a reference cell (ref-cell). Even if DCIF is set in the SS of the scheduled cell, it is considered invalid and is not applied or is ignored.

    ■ In this method, for the specific SS ID, the SS (including any DCIF and any number of PCs) may not be configured in the other scheduled cells except the ref-cell.
    ■ Accordingly, for the specific SS on the scheduling cell, a PC set as large as the number of PCs set in the SS of the scheduled cell (i.e., ref-cell) may be configured for the DCIF (e.g., m-cc DCI format) included in the SS configuration of the scheduling cell.

♦ In this case, if the scheduling cell does not belong to the scheduled cell of the m-cc DCI, or if it does, but is not the ref-cell, the number of PCs related to the m-cc DCI format set in the SS of the scheduling cell may be invalid and thus may not be applied.

■ On the other hand, if the scheduling cell belongs to the scheduled cell of the m-cc DCI and is a ref-cell, both the number of PCs per AL and the DCIF (i.e., m-cc DCI format) set in the SS of the ref-cell (i.e., scheduling cell) may be valid and applied.

♦ In this case, the SS (including any DCIF and the number of PCs) may not be set in all the scheduled cells except the scheduling cell (i.e., ref-cell) for the specific SS ID.
♦ For the specific SS on the scheduling cell, a PC set as large as the number of PCs included in the SS configuration of the scheduling cell may be configured for the DCIF (e.g., m-cc DCI format) included in the SS configuration of the scheduling cell.
♦ In addition, in this case, when both m-cc DCI format and s-cc DCI format are set simultaneously in the SS of the scheduling cell (i.e., ref-cell) along with the number of PCs, the number of PCs set for both DCI formats may be valid and applied.

- [Method 5-2]: For a specific SS (ID), the number of PCs per AL and the DCIF are set in the SS of the scheduled cell (referred to as ref-cell below) that is SS-linked to the scheduling cell, and the DCIF is used in the scheduling cell to determine the DCI format for which the specific SS is configured.

■ In this method, for the specific SS ID, the SS (including the m-cc DCI format and the corresponding number of PCs) may not be configured in the other scheduled cells except the ref-cell.
■ Accordingly, for the specific SS on the scheduling cell, a PC set as large as the number of PCs set in the SS of the scheduled cell may be configured for the DCIF (e.g., m-cc DCI format) set in the SS of the scheduled cell.

♦ If the scheduling cell does not belong to the scheduled cell of the m-cc DCI, or if it does, but is not the ref-cell, the m-cc DCI format (and the corresponding number of PCs) may not be set in the SS of the scheduling cell. Alternatively, even if the m-cc DCI format is set, it may be invalid and may not be applied

■ On the other hand, if the scheduling cell belongs to the scheduled cell of the m-cc DCI and is a ref-cell, both the number of PCs per AL and the DCIF (i.e., m-cc DCI format) may be set (and applied/valid) in the SS of the ref-cell (i.e., the scheduling cell).

♦ In this case, the SS (including the m-cc DCI format and the corresponding number of PCs) may not be configured in all scheduled cells except the scheduling cell (i.e., ref-cell) for the specific SS ID.
♦ For the specific SS on the scheduling cell, a PC set as large as the number of PCs included in the SS configuration of the scheduling cell may be configured for the DCIF (e.g., m-cc DCI format) included in the SS configuration of the scheduling cell.
♦ In addition, when both m-cc DCI format and s-cc DCI format are set simultaneously in the SS of the scheduling cell (i.e., ref-cell) along with the number of PCs, the number of PCs set for both DCI formats may be valid and applied.

[Method 5-1] and [Method 5-2] may have the following differences.

- Assumptions for the examples below

■ The scheduled cells for m-cc DCI are cell1, cell2, cell3, cell4, and the SSs with SS IDs 1,2,3,4 are labeled as SS ID_1, SS ID_2, SS ID_3, SS ID_4.

The number of PCs (e.g., 14) for s-cc DCI is indicated as "SC 14." The number of PCs for m-cc DCI is indicated as "MC 22" or "SC=MC=11." In this case, the expression "MC 22" is given when the DCIF is set to "m-cc DCI only", and the expression "SC=MC=11" is given when the DCIF is set to "m-cc DCI and s-cc DCI" (e.g., the number of PCs is 11 for each DCI).

Bold text represents the ref-cell for the corresponding SS ID. The per-cell BD limit (per slot) is assumed to be 36. It may be understood as a value set to limit the value for each cell.

Table 16 shows examples of possible PC number settings based on [Method 5-1].

- Since the DCIF follows the set value of the scheduling cell, DCIF for s-cc DCI is not set in the scheduled cell SS-linked to the scheduling cell, and thus the number of PCs is not set for s-cc DCI.

[Table 16]

| SS ID | Slot A | | Slot B | | Slot C | | Slot D | |
|---|---|---|---|---|---|---|---|---|
| | SS ID_1 | SS ID_2 | SS ID_1 | SS ID_3 | SS ID_2 | SS ID_3 | SS ID_3 | SS ID_4 |
| Cell 1 | SC 14 → Not used | **MC 22 (or SC = MC = 11)** | SC 14 → Not used | SC 12 | **MC 22 (or SC = MC = 11)** | SC 12 | SC 12 | |
| Cell 2 | | SC 20 → Not used | | SC 16 | SC 20 → Not used | SC 16 | SC 16 | SC 18 |
| Cell 3 | **MC 26 (or SC = MC = 13)** | SC 10 → Not used | **MC 26 (or SC = MC = 13)** | SC 8 | SC 10 → Not used | SC 8 | SC 8 | SC 28 |
| Cell 4 | SC 12 → Not used | SC 20 → Not used | SC 12 → Not used | | SC 20 → Not used | | | SC 36 |

Table 17 shows examples of possible PC number settings based on [Method 5-2].

- Since the DCIF follows the set value of the scheduled cell, the number of PCs for s-cc DCI may also be set in the scheduled cell SS-linked to the scheduling cell (but not to exceed the per cell BD limit).

[Table 17]

| SS ID | Slot A | | Slot B | | Slot C | | Slot D | |
|---|---|---|---|---|---|---|---|---|
| | SS ID_1 | SS ID_2 | SS ID_1 | SS ID_3 | SS ID_2 | SS ID_3 | SS ID_3 | SS ID_4 |
| Cell 1 | SC 14 | **MC 22 (or SC = MC = 11)** | SC 14 | SC 12 | **MC 22 (or SC = MC = 11)** | SC 12 | SC 12 | |
| Cell 2 | | SC 20 | | SC 16 | SC 20 | SC 16 | SC 16 | SC 18 |
| Cell 3 | **MC 26 (or SC = MC = 13)** | SC 10 | **MC 26 (or SC = MC = 13)** | SC 8 | SC 10 | SC 8 | SC 8 | SC 28 |
| Cell 4 | SC 12 | SC 20 | SC 12 | | SC 20 | | | SC 36 |

[5-2] Method of configuring one scheduled cell for which the SS of the m-cc DCI is configured

For a specific SS (ID), the SS of the m-cc DCI (e.g., the number of PCs per AL) (for SS linking to the scheduling cell) may be configured in a one specific cell (=ref-cell) among the scheduled cells that may be scheduled through the DCI. Further, the ID of the SS configured for the m-cc DCI in the ref-cell should be the same as and the ID of the SS configured in the scheduling cell (of the m-cc DCI). Therefore, the ref-cell that is SS-linked to the scheduling cell for the m-cc DCI (i.e., that has the SS of the m-cc DCI configured) may be configured separately/independently (e.g., differently) for each SS ID (set in the scheduling cell). For example, suppose that four scheduled cells (e.g., cell#1, #2, #3, #4) are configured for the m-cc DCI. For SS#1 (= SS with SS ID of 1) configured in the scheduling cell, the SS of the m-cc DCI may be configured in SS#1 of cell#2, thereby establishing an SS linking relationship between the scheduling cell and cell#2. For SS#2 (=SS with SS ID of 2) configured in the scheduling cell, the SS of the m-cc DCI may be configured in SS#2 of cell#3, thereby establishing an SS linking relationship between the scheduling cell and cell#3.

As another method, the ref-cell (in which the SS of the m-cc DCI is configured) having an SS linking relationship with the scheduling cell for the m-cc DCI may be configured to be the same for all SS IDs (configured for the m-cc DCI in the scheduling cell). For example, when four scheduled cells (e.g., cell#1, #2, #3, #4) are configured for the m-cc DCI, the SS of the m-cc DCI may be configured in SS#1 and SS#2 of cell#2 for both SS#1 and SS#2 configured in the scheduling cell, thereby establishing an SS linking relationship between the scheduling cell and cell#2.

As another method, the ref-cell (in which the SS of the m-cc DCI is configured) having an SS linking relationship with the scheduling cell for the m-cc DCI may be determined/configured through a (separate) RRC configuration. In this case, the RRC configuration may be established per cell (or BWP) (i.e. per cell (or per BWP) configuration). In this case, only the number of PCs set for the m-cc DCI (e.g., having the DCIF corresponding to the m-cc DCI) may be valid in the SS set configuration of the configured ref-cell. Alternatively, the RRC may be configured per SS (ID). In this case, only the number of PCs set for the m-cc DCI (for the corresponding SS ID) in the SS set configuration of the configured ref-cell may be valid. If the number of PCs for the m-cc DCI is not set for a specific SS (ID) (for configured ref-cell), only the number of PCs set for s-cc DCI may be valid for the SS ID (ignoring the configuration for the m-cc DCI). Also, for scheduled cells other than the ref-cell (configured through the RRC) for a specific SS (ID), any number of PCs set for the m-cc DCI may be invalid. Thus, it may not be applied or may be ignored.

[5-3] Method of configuring a scheduled cell for counting BD/CCE of m-cc DCI

When a ref-cell that has an SS linking are relationship (with a scheduling cell) for a specific SS ID and the SS (i.e., the number of PCs or number of BDs) of the m-cc DCI configured for the SS ID are set/determined through [5-1] and [5-2], the target of BD/CCE counting for the m-cc DCI (for the SS ID) may be determined to be the ref-cell. For example, when N BDs/CCEs related to m-cc DCI are configured for the SS ID, they may be counted as N BD/CCEs for the ref-cell. As a result, for the same single SS ID, the ref-cell that is SS-linked (to the scheduling cell) for the m-cc DCI may be determined to be the same as the cell for which BDs/CCEs for the corresponding m-cc DCI are counted. For different SS IDs, the corresponding cells (that are SS-linked to the m-cc DCI and for which the corresponding BDs/CCEs are counted) may be configured/determined to be (the same or different).

As another method, when different SS-linked ref-cells for the m-cc DCI are configured for different SS IDs and thus multiple ref-cells are present, the cell for which the BDs/CCEs for the m-cc DCI are counted may be determined to be a specific one of the multiple ref-cells (using, for example, the following methods). Thus, in this case, for all SS IDs for which the SS of the m-cc DCI is configured, all the corresponding BCs/CCEs may only be counted in the specific one cell.

- Method 0: Determining one specific ref-cell configured through RRC among the multiple ref-cells
- Method 1: Determining the ref-cell for the lowest (or highest) SS ID
- Method 2: Determining the ref-cell with the lowest (or highest) cell index

Since the SS configuration of the m-cc DCI and the PC number setting (included therein) are provided for one scheduled cell (=ref-cell) (which has an SS linking relationship with the scheduling cell), the BD/CCE counting for the m-cc DCI may be performed in the ref-cell. In this case, the UE may expect that the number of PCs set for the ref-cell is set to a value that does not exceed the BD/CCE limit for the cell. However, depending on the UE implementation, even if the SS is configured in a specific cell for the m-cc DCI and BDs/CCEs are counted only in the cell, the PDCCH monitoring in another cell (for which the SS and the number of PCs are not configured for the m-cc DCI) (or BD/CCE limit of the other cell) may be affected.

For example, when cell#1 and cell#2 are co-scheduled through m-cc DCI, s-cc DCI may be configured in cell#1. In this case, in setting the number of PCs for m-cc DCI in cell#1, the number of PCs for the m-cc DCI may be set considering the number of PCs for the s-cc DCI in order not to exceed the BD/CCE limit defined for each cell (because the number of PCs for the s-cc DCI is set in cell#1). On the other hand, when setting the number of PCs for the m-cc DCI in cell#2, a greater value may be set as the number of PCs (without considering the number of PCs for the s-cc DCI). However, depending on the UE implementation, the sum of the BD/CCE counting of the monitoring for the s-cc DCI and the monitoring for the m-cc DCI may be required in cell#1.

To address this issue, the SS and number of PCs for the m-cc DCI (for a specific SS ID) are set in only one scheduled cell (i.e., ref-cell). The corresponding BD/CCE counting may be performed for all scheduled cells (or co-scheduled cells that are scheduled simultaneously with the ref-cell) for the m-cc DCI. For example, when N BDs/CCEs related to m-cc DCI are configured for the SS ID, the counting may be performed considering that they are N BDs/CCEs for each of all scheduled cells. Since the effectiveness of this method may vary depending on the UE implementation, it may be reported through the UE capability that even when the SS and the number of PCs are set for only one cell, the corresponding BD/CCE counting may be performed for multiple cells. Alternatively, it may be reported that the SS and the number of PCs are set for one cell and the corresponding BD/CCE count is also performed for the one cell. In this case, the RRC configuration corresponding to the UE capability may also be established.

[5-4] Method of configuring a scheduled cell for which the DCI size of m-cc DCI is counted

Setting of the SS configuration and number of PCs of the m-cc DCI may be performed for one scheduled cell (=ref-cell) for each SS ID having an SS linking relationship with the scheduling cell, and the BDs/CCEs (corresponding to the SS) may be counted for the ref-cell for each SS ID (or the BDs/CCEs may be counted for all scheduled cells) according to [5-3] above. On the other hand, the DCI size of the corresponding m-cc DCI does not need to be counted per SS ID. That is, the DCI size of the m-cc DCI may be counted for only one specific cell among the ref-cells for each SS ID (For example, the DCI size of the m-cc DCI format may be counted as the DCI size related to the specific cell). For example, when three SS IDs are configured for the m-cc DCI and three different ref-cells are configured/determined for each SS ID, the DCI size of the m-cc DCI format may be counted for only one specific cell among the three ref-cells.

Method of determining one cell for which the DCI size is to be counted when there are multiple different ref-cells for each SS ID

- Method 0: Determining one specific ref-cell configured through RRC among the multiple ref-cells
- Method 1: Determining a ref-cell for the lowest (or highest) SS ID
- Method 2: Determining a ref-cell with the lowest (or highest) cell index
- Method 3: Determining a ref-cell for which fallback DCI (e.g., DCI format 0_0, 1_0) is configured

  ■ When such ref-cells are two or more, Method 1 or Method 2 may be applied.

- Method 4: Selecting a ref-cell with fewer than three DCI formats scrambled with C-RNTI (except the mc-DCI)

  ■ When such ref-cells are two or more, Method 1 or Method 2 may be applied.

- Method 5: Selecting a ref-cell with the least number of DCI formats scrambled with C-RNTI (except the mc-DCI)

  ■ When such ref-cells are two or more, Method 1 or Method 2 may be applied.

Alternatively, a ref-cell may be selected as follows.

- (1) Check one of the methods first, and select the ref-cell when the result of the check does not exceed the DCI size budget;
- (2) When the result of the check in (1) exceeds the DCI size budget, check one other method. When the result of checking the other method does not exceed the DCI size budget, select the ref-cell;
- (3) When the result of the check in (2) also exceeds the DCI size budget, check the method other than the above two methods.

In this way, a ref-cell may be selected.

Alternatively, when the result of the check exceeds the DCI size budget even after applying all the methods above, a specific DCI format (e.g., DCI format 0_2, 1_2) may be dropped from one ref-cell selected through Method 1 or Method 2 above, and the cell may be selected as the ref-cell.

Alternatively, when m-cc DCI is configured and/or a ref-cell is selected for each SS ID, a specific DCI format (e.g., DCI format 0_2, 1_2) may not be configured in the cell (or may be dropped even if configured) and the ref-cell for which the DCI size is to be counted may be selected using the methods described above.

[5-5] For each scheduled cell of the m-cc DCI, it may be reported as a UE capability whether the sum of the "number of PCs (or BDs) configured for s-cc DCI" and the "number of PCs (or BDs) configured for m-cc DCI" exceeds the existing per cell BD limit of Rel-17. In this case, corresponding RRC may be configured.

When the UE capability is not set (to allow the per cell BD limit to be exceeded), or when the per cell BD limit cannot be exceeded in the configuration of the m-cc DCI and/or s-cc DCI (regardless of the UE capability), at least one of the following approaches may be applied.

- The per cell BD limit minus the "maximum number of PCs (or BDs) of s-cc DCI per cell" may be set to the maximum configurable value of the number of PCs (or BDs) of m-cc DCI.
- The per cell BD limit minus the "minimum number of PCs (or BDs) of s-cc DCI per cell" is set to the maximum configurable value of the number of PCs (or BDs) of m-cc DCI. In this case, if the sum of "the number of PCs (or BDs) of s-cc DCI per cell" and "the number of PCs (or BDs) of m-cc DCI per cell" exceeds the per cell BD limit, some (or all) of the PCs (or BDs) of s-cc DCI may be dropped (so as not to exceed the per cell BD limit).
- The "number of PCs (or BDs) of m-cc DCI per cell" is set not to exceed the per cell BD limit (without any other constraints). In this case, if the sum of "the number of PCs (or BDs) of s-cc DCI per cell" and "the number of PCs (or BDs) of m-cc DCI per cell" exceeds the per cell BD limit, some (or all) of the PCs (or BDs) of s-cc DCI may be dropped (so as not to exceed the per cell BD limit).

In addition, the ability for multiple PDCCH receptions (for scheduled cells of the m-cc DCI) on the same MO (for PDCCH of the m-cc DCI) may be reported as UE capability. In this case, corresponding RRC may be configured.

The present disclosure is not limited to the transmission and reception of uplink and/or downlink signals. For example, the details of the present disclosure may also be used in direct communication between UEs. Furthermore, in the present disclosure, the BS may be a concept that includes not only a base station but also a relay node. For example, in the present disclosure, the BS operation may be performed by a base station, or may be performed by a relay node.

It is apparent that the above-described examples of the proposed methods may also be included as one of the implementation methods of the present disclosure, and thus may be considered as a type of proposed methods. Furthermore, the above-described proposed methods may be implemented independently, or some of the proposed methods may be implemented in a combined (or merged) form. Rules may be defined such that information about the applicability of the above-described proposed methods (or information about the rules of the above-described proposed methods) may be communicated by a BS to a UE or by a transmitting UE to a receiving UE through a predefined signal (e.g., a physical layer signal or a higher layer signal).

Implementation Example

FIG. 4 is a flowchart illustrating a method of transmitting and receiving signals according to embodiments of the present disclosure.

Referring to FIG. 4, a signal monitoring method according to embodiments of the present disclosure may be performed by a UE and may include operation S501 of configuring a set of serving cells and operation S503 of monitoring a specific PDCCH candidate on a scheduling cell for detecting specific DCI for scheduling for the serving cells in the set of serving cells. Although not shown, a signal transmission method according to another embodiment of the present disclosure may be performed by a BS, and may include configuring a set of serving cells for a UE and transmitting a PDCCH including specific DCI for scheduling for the serving cells in the set of serving cells on a scheduling cell.

In addition to the operations of FIG. 4, one or more of the operations described in sections [1] to [5] may be performed alone or in combination.

For example, based on the operations in section [1], a DCI format may be configured for a specific DCI. Further, a search space may be configured for specific DCI based on section [2]. Further, the value of n_CI may be determined for the specific DCI based on section [3]. Further, size counting and/or BD counting may be performed for the specific DCI based on section [4].

In each of the embodiments, the DCI format of specific DCI may be DCI used to schedule multiple channels in multiple cells, such that one channel is included per cell. For example, the DCI format of the specific DCI may be DCI format 0_3 (wherein DCI format 0_3 is used for the scheduling of one PUSCH in one cell, or multiple PUSCHs in multiple cells with one PUSCH per cell) and/or DCI format 1_3 (wherein DCI format 1_3 is used for the scheduling of one PDSCH in one cell, or multiple PDSCHs in multiple cells with one PDSCH per cell). Alternatively, the DCI format of the specific DCI may be DCI used to schedule multiple channels in multiple cells, such that one or more channels are included per cell.

As a specific example, referring to Method [5-2] in section [5], when a scheduling cell belongs to a scheduled cell of m-cc DCI and is a ref-cell, may have both the number of PCs per AL and the DCIF (e.g., m-cc DCI format) may be set in the SS of the ref-cell (i.e., scheduling cell). In this case, SS may not be configured in any of the scheduled cells except the scheduling cell. Also, referring to section [5-3], when a ref-cell that is SS-linked (to the scheduling cell) for a specific SS ID and the SS (i.e., the number of PCs or the number of BDs) of the m-cc DCI configured for the SS ID are set/determined, the target of BD/CCE counting for the corresponding m-cc DCI (for the SS ID) may be determined to be the ref-cell.

In FIG. 4, since the DCI performs scheduling for the serving cells in a set of serving cells such that one channel is included per cell, the set of serving cells may be construed as a scheduled cell set. Therefore, a scheduling cell belonging to a scheduled cell of the m-cc DCI is equivalent to the scheduling cell being included in the set of serving cells. Since the SS is not configured for any of the scheduled cells except the scheduling cells, the search space set for the specific PDCCH candidate in FIG. 4 is provided for the scheduling cell only. In this case, the scheduling cell is the ref-cell that is SS-linked to the scheduling cell, and therefore the target of BD/CCE counting is the scheduling cell.

BD counting means counting the number of PDCCH candidates monitored by the UE, and CCE counting means counting the number of non-overlapped CCEs monitored by the UE.

Therefore, referring to the descriptions in sections [5-1] and [5-3], the serving cell for counting the PDCCH candidates and a corresponding number of non-overlapping CCEs is the scheduling cell, if the scheduling cell is included in the set of serving cells and the UE is provided search space sets for the PDCCH candidates only on the scheduling cell.

Further, according to clauses [5-1] and [5-3], when the scheduling cell is not included in the set of serving cells, the ref-cell SS-linked to the scheduling cell is the target of BD/CCE counting. Since the scheduling cell is not included in the set of serving cells, a specific serving cell in the set of serving cells becomes the ref-cell linked to the scheduling cell. SS linking means that for specific DCI, search space sets with the same ID are provided on the scheduling cell and on a specific serving cell in the set of serving cells. Thus, for the specific DCI, the serving cell for counting the PDCCH candidates and a corresponding number of non-overlapping CCEs is a serving cell from the set of serving cells, if search space sets with same searchSpaceId for one or both of DCI format 0_3 and DCI format 1_3, respectively, are provided on the serving cell and on the scheduling cell.

BD/CCE counting is related to the limitation of the number of times of monitoring of the PDCCH candidates and the number of times of monitoring of the non-overlapping CCEs by the UE. Referring to Tables 10.1-2, 10.1-2A, 10.1-2B, 10.1-3, 10.1-3A, and 10.1-3B of the prior 3GPP standard (38.213), the maximum number of PDCCH candidates to be monitored and the maximum number of non-overlapping CCEs to be monitored per serving cell and per time interval (e.g. slot, span, group of slots) are provided for each SCS configuration. The UE is not required to monitor PDCCH candidates or non-overlapping PDCCHs more than a specific number within the time interval for the active DL BWPs in the scheduling cell.

As such, the UE does not monitor PDCCH candidates or non-overlapping PDCCHs more than the specific number within the specific time interval. To determine whether the UE performs the monitoring based on the specific number, the PDCCH candidates and the number of corresponding non-overlapping CCEs for the specific DCI are counted, wherein the cell on which the counting is based is the scheduling cell or the specific serving cell as determined with reference to sections [5-1] and [5-3].

Referring to the prior 3GPP standard (38.212, 38.213), the number of DCI sizes that may be monitored by the UE is also limited. Specifically, the PDCCH candidates that the UE may monitor may be limited to up to 4 DCI sizes of DCI formats per serving cell. A UE expects to monitor PDCCH candidates for up to 4 sizes of DCI formats that include up to 3 sizes of DCI formats with CRC scrambled by C-RNTI per serving cell. The UE counts a number of sizes for DCI formats per serving cell based on a number of configured PDCCH candidates in respective search space sets for the corresponding active DL BW. To satisfy the limitation on the number of DCI sizes, DCI size alignment may be performed.

Referring to section [5-4], the DCI size of the m-cc DCI may be counted only on one specific cell among the ref-cells per SS ID. In relation to [Method 5-2], the serving cell for counting the size of one or both DCI format 0_3 and DCI format 1_3, respectively, is the scheduling cell, if the scheduling cell is included in the set of serving cells and the UE is provided search space sets for the PDCCH candidates only on the scheduling cell.

Further, the serving cell for counting the size of one or both DCI format 0_3 and DCI format 1_3, respectively, is a serving cell from the set of serving cells, when search space sets with same searchSpaceId for one or both of DCI format 0_3 and DCI format 1_3, respectively, are provided on the serving cell and on the scheduling cell.

In addition to the operations described in relation to FIG. 4, the operations described in FIGS. 1 to 3 and/or one or more of the operations described in sections [1] to [4] may be additionally performed in combination.

Example of communication system to which the present disclosure is applied

The various descriptions, functions, procedures, proposals, methods, and/or operation flowcharts of the present disclosure described herein may be applied to, but not limited to, various fields requiring wireless communication/connectivity (e.g., 5G) between devices.

More specific examples will be described below with reference to the drawings. In the following drawings/description, like reference numerals denote the same or corresponding hardware blocks, software blocks, or function blocks, unless otherwise specified.

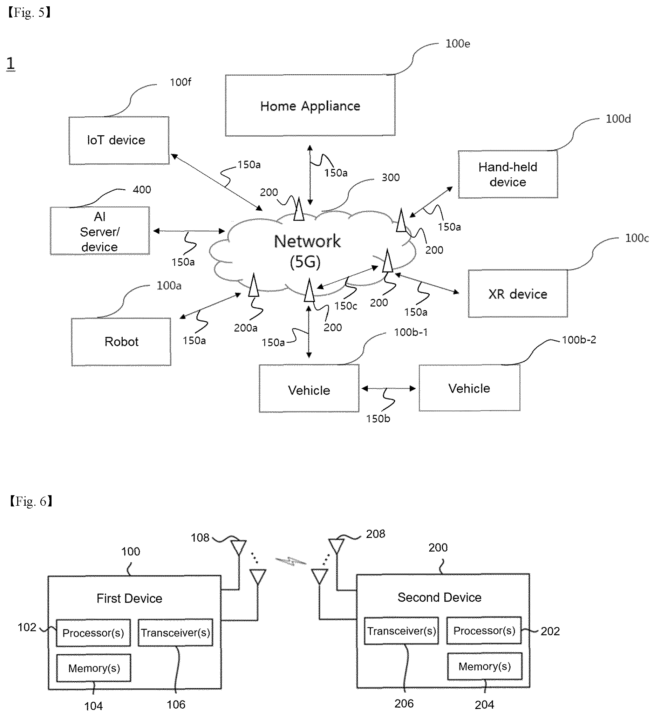

FIG. 5 illustrates a communication system 1 applied to the present disclosure.

Referring to FIG. 5, the communication system 1 applied to the present disclosure includes wireless devices, BSs, and a network. A wireless device is a device performing communication using radio access technology (RAT) (e.g., 5G NR (or New RAT) or LTE), also referred to as a communication/radio/5G device. The wireless devices may include, not limited to, a robot 100a, vehicles 100b-1 and 100b-2, an extended reality (XR) device 100c, a hand-held device 100d, a home appliance 100e, an IoT device 100f, and an artificial intelligence (AI) device/server 400. For example, the vehicles may include a vehicle having a wireless communication function, an autonomous driving vehicle, and a vehicle capable of vehicle-to-vehicle (V2V) communication. Herein, the vehicles may include an unmanned aerial vehicle (UAV) (e.g., a drone). The XR device may include an augmented reality (AR)/virtual reality (VR)/mixed reality (MR) device and may be implemented in the form of a head-mounted device (HMD), a head-up display (HUD) mounted in a vehicle, a television (TV), a smartphone, a computer, a wearable device, a home appliance, a digital signage, a vehicle, a robot, and so on. The hand-held device may include a smartphone, a smart pad, a wearable device (e.g., a smart watch or smart glasses), and a computer (e.g., a laptop). The home appliance may include a TV, a refrigerator, a washing machine, and so on. The IoT device may include a sensor, a smart meter, and so on. For example, the BSs and the network may be implemented as wireless devices, and a specific wireless device 200a may operate as a BS/network node for other wireless devices.

The wireless devices 100a to 100f may be connected to the network 300 via the BSs 200. An AI technology may be applied to the wireless devices 100a to 100f, and the wireless devices 100a to 100f may be connected to the AI server 400 via the network 300. The network 300 may be configured using a 3G network, a 4G (e.g., LTE) network, or a 5G (e.g., NR) network. Although the wireless devices 100a to 100f may communicate with each other through the BSs 200/network 300, the wireless devices 100a to 100f may perform direct communication (e.g., sidelink communication) with each other without intervention of the BSs/network. For example, the vehicles 100b-1 and 100b-2 may perform direct communication (e.g., V2V/vehicle-to-everything (V2X) communication). The IoT device (e.g., a sensor) may perform direct communication with other IoT devices (e.g., sensors) or other wireless devices 100a to 100f.

Wireless communication/connections 150a, 150b, and 150c may be established between the wireless devices 100a to 100f/BS 200 and between the BSs 200. Herein, the wireless communication/connections may be established through various RATs (e.g., 5G NR) such as UL/DL communication 150a, sidelink communication 150b (or, D2D communication), or inter-BS communication (e.g., relay or integrated access backhaul (IAB)). Wireless signals may be transmitted and received between the wireless devices, between the wireless devices and the BSs, and between the BSs through the wireless communication/connections 150a, 150b, and 150c. For example, signals may be transmitted and receive don various physical channels through the wireless communication/connections 150a, 150b and 150c. To this end, at least a part of various configuration information configuring processes, various signal processing processes (e.g., channel encoding/decoding, modulation/demodulation, and resource mapping/demapping), and resource allocation processes, for transmitting/receiving wireless signals, may be performed based on the various proposals of the present disclosure.

Example of wireless device to which the present disclosure is applied

FIG. 6 illustrates wireless devices applicable to the present disclosure.

Referring to FIG. 6, a first wireless device 100 and a second wireless device 200 may transmit wireless signals through a variety of RATs (e.g., LTE and NR). {The first wireless device 100 and the second wireless device 200} may correspond to {the wireless device 100x and the BS 200} and/or {the wireless device 100x and the wireless device 100x} of FIG. 5.

The first wireless device 100 may include one or more processors 102 and one or more memories 104, and further include one or more transceivers 106 and/or one or more antennas 108. The processor(s) 102 may control the memory(s) 104 and/or the transceiver(s) 106 and may be configured to implement the descriptions, functions, procedures, proposals, methods, and/or operation flowcharts disclosed in this document. For example, the processor(s) 102 may process information in the memory(s) 104 to generate first information/signals and then transmit wireless signals including the first information/signals through the transceiver(s) 106. The processor(s) 102 may receive wireless signals including second information/signals through the transceiver(s) 106 and then store information obtained by processing the second information/signals in the memory(s) 104. The memory(s) 104 may be connected to the processor(s) 102 and may store various pieces of information related to operations of the processor(s) 102. For example, the memory(s) 104 may store software code including instructions for performing all or a part of processes controlled by the processor(s) 102 or for performing the descriptions, functions, procedures, proposals, methods, and/or operation flowcharts disclosed in this document. The processor(s) 102 and the memory(s) 104 may be a part of a communication modem/circuit/chip designed to implement RAT (e.g., LTE or NR). The transceiver(s) 106 may be connected to the processor(s) 102 and transmit and/or receive wireless signals through the one or more antennas 108. Each of the transceiver(s) 106 may include a transmitter and/or a receiver. The transceiver(s) 106 may be interchangeably used with radio frequency (RF) unit(s). In the present disclosure, the wireless device may be a communication modem/circuit/chip.

The second wireless device 200 may include one or more processors 202 and one or more memories 204, and further include one or more transceivers 206 and/or one or more antennas 208. The processor(s) 202 may control the memory(s) 204 and/or the transceiver(s) 206 and may be configured to implement the descriptions, functions, procedures, proposals, methods, and/or operation flowcharts disclosed in this document. For example, the processor(s) 202 may process information in the memory(s) 204 to generate third information/signals and then transmit wireless signals including the third information/signals through the transceiver(s) 206. The processor(s) 202 may receive wireless signals including fourth information/signals through the transceiver(s) 106 and then store information obtained by processing the fourth information/signals in the memory(s) 204. The memory(s) 204 may be connected to the processor(s) 202 and store various pieces of information related to operations of the processor(s) 202. For example, the memory(s) 204 may store software code including instructions for performing all or a part of processes controlled by the processor(s) 202 or for performing the descriptions, functions, procedures, proposals, methods, and/or operation flowcharts disclosed in this document. The processor(s) 202 and the memory(s) 204 may be a part of a communication modem/circuit/chip designed to implement RAT (e.g., LTE or NR). The transceiver(s) 206 may be connected to the processor(s) 202 and transmit and/or receive wireless signals through the one or more antennas 208. Each of the transceiver(s) 206 may include a transmitter and/or a receiver. The transceiver(s) 206 may be interchangeably used with RF unit(s). In the present disclosure, the wireless device may be a communication modem/circuit/chip.

Now, hardware elements of the wireless devices 100 and 200 will be described in greater detail. One or more protocol layers may be implemented by, not limited to, one or more processors 102 and 202. For example, the one or more processors 102 and 202 may implement one or more layers (e.g., functional layers such as physical (PHY), medium access control (MAC), radio link control (RLC), packet data convergence protocol (PDCP), RRC, and service data adaptation protocol (SDAP)). The one or more processors 102 and 202 may generate one or more protocol data units (PDUs) and/or one or more service data Units (SDUs) according to the descriptions, functions, procedures, proposals, methods, and/or operation flowcharts disclosed in this document. The one or more processors 102 and 202 may generate messages, control information, data, or information according to the descriptions, functions, procedures, proposals, methods, and/or operation flowcharts disclosed in this document and provide the messages, control information, data, or information to one or more transceivers 106 and 206. The one or more processors 102 and 202 may generate signals (e.g., baseband signals) including PDUs, SDUs, messages, control information, data, or information according to the descriptions, functions, procedures, proposals, methods, and/or operation flowcharts disclosed in this document and provide the generated signals to the one or more transceivers 106 and 206. The one or more processors 102 and 202 may receive the signals (e.g., baseband signals) from the one or more transceivers 106 and 206 and acquire the PDUs, SDUs, messages, control information, data, or information according to the descriptions, functions, procedures, proposals, methods, and/or operation flowcharts disclosed in this document.

The one or more processors 102 and 202 may be referred to as controllers, microcontrollers, microprocessors, or microcomputers. The one or more processors 102 and 202 may be implemented by hardware, firmware, software, or a combination thereof. For example, one or more application specific integrated circuits (ASICs), one or more digital signal processors (DSPs), one or more digital signal processing devices (DSPDs), one or more programmable logic devices (PLDs), or one or more field programmable gate arrays (FPGAs) may be included in the one or more processors 102 and 202. The descriptions, functions, procedures, proposals, methods, and/or operation flowcharts disclosed in this document may be implemented using firmware or software, and the firmware or software may be configured to include the modules, procedures, or functions. Firmware or software configured to perform the descriptions, functions, procedures, proposals, methods, and/or operation flowcharts disclosed in this document may be included in the one or more processors 102 and 202 or may be stored in the one or more memories 104 and 204 and executed by the one or more processors 102 and 202. The descriptions, functions, procedures, proposals, methods, and/or operation flowcharts disclosed in this document may be implemented using firmware or software in the form of code, an instruction, and/or a set of instructions.

The one or more memories 104 and 204 may be connected to the one or more processors 102 and 202 and store various types of data, signals, messages, information, programs, code, instructions, and/or commands. The one or more memories 104 and 204 may be configured to include read-only memories (ROMs), random access memories (RAMs), electrically erasable programmable read-only memories (EPROMs), flash memories, hard drives, registers, cash memories, computer-readable storage media, and/or combinations thereof. The one or more memories 104 and 204 may be located at the interior and/or exterior of the one or more processors 102 and 202. The one or more memories 104 and 204 may be connected to the one or more processors 102 and 202 through various technologies such as wired or wireless connection.

The one or more transceivers 106 and 206 may transmit user data, control information, and/or wireless signals/channels, mentioned in the methods and/or operation flowcharts of this document, to one or more other devices. The one or more transceivers 106 and 206 may receive user data, control information, and/or wireless signals/channels, mentioned in the descriptions, functions, procedures, proposals, methods, and/or operation flowcharts disclosed in this document, from one or more other devices. For example, the one or more transceivers 106 and 206 may be connected to the one or more processors 102 and 202 and transmit and receive wireless signals. For example, the one or more processors 102 and 202 may perform control so that the one or more transceivers 106 and 206 may transmit user data, control information, or wireless signals to one or more other devices. The one or more processors 102 and 202 may perform control so that the one or more transceivers 106 and 206 may receive user data, control information, or wireless signals from one or more other devices. The one or more transceivers 106 and 206 may be connected to the one or more antennas 108 and 208 and the one or more transceivers 106 and 206 may be configured to transmit and receive user data, control information, and/or wireless signals/channels, mentioned in the descriptions, functions, procedures, proposals, methods, and/or operation flowcharts disclosed in this document, through the one or more antennas 108 and 208. In this document, the one or more antennas may be a plurality of physical antennas or a plurality of logical antennas (e.g., antenna ports). The one or more transceivers 106 and 206 may convert received wireless signals/channels from RF band signals into baseband signals in order to process received user data, control information, and wireless signals/channels using the one or more processors 102 and 202. The one or more transceivers 106 and 206 may convert the user data, control information, and wireless signals/channels processed using the one or more processors 102 and 202 from the baseband signals into the RF band signals. To this end, the one or more transceivers 106 and 206 may include (analog) oscillators and/or filters.

Example of use of wireless device to which the present disclosure is applied

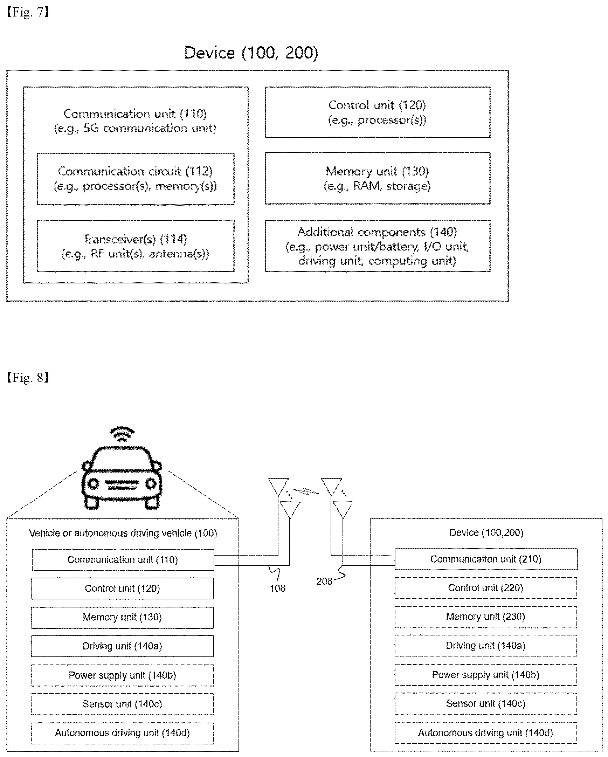

FIG. 7 illustrates another example of a wireless device applied to the present disclosure. The wireless device may be implemented in various forms according to a use case/service (refer to FIG. 5).

Referring to FIG. 7, wireless devices 100 and 200 may correspond to the wireless devices 100 and 200 of FIG. 6 and may be configured to include various elements, components, units/portions, and/or modules. For example, each of the wireless devices 100 and 200 may include a communication unit 110, a control unit 120, a memory unit 130, and additional components 140. The communication unit 110 may include a communication circuit 112 and transceiver(s) 114. For example, the communication circuit 112 may include the one or more processors 102 and 202 and/or the one or more memories 104 and 204 of FIG. 6. For example, the transceiver(s) 114 may include the one or more transceivers 106 and 206 and/or the one or more antennas 108 and 208 of FIG. 6. The control unit 120 is electrically connected to the communication unit 110, the memory 130, and the additional components 140 and provides overall control to the wireless device. For example, the control unit 120 may control an electric/mechanical operation of the wireless device based on programs/code/instructions/information stored in the memory unit 130. The control unit 120 may transmit the information stored in the memory unit 130 to the outside (e.g., other communication devices) via the communication unit 110 through a wireless/wired interface or store, in the memory unit 130, information received through the wireless/wired interface from the outside (e.g., other communication devices) via the communication unit 110.

The additional components 140 may be configured in various manners according to type of the wireless device. For example, the additional components 140 may include at least one of a power unit/battery, input/output (I/O) unit, a driving unit, and a computing unit. The wireless device may be implemented in the form of, not limited to, the robot (100a of FIG. 5), the vehicles (100b-1 and 100b-2 of FIG. 5), the XR device (100c of FIG. 5), the hand-held device (100d of FIG. 5), the home appliance (100e of FIG. 5), the IoT device (100f of FIG. 5), a digital broadcasting terminal, a hologram device, a public safety device, an MTC device, a medical device, a FinTech device (or a finance device), a security device, a climate/environment device, the AI server/device (400 of FIG. 5), the BSs (200 of FIG. 5), a network node, or the like. The wireless device may be mobile or fixed according to a use case/service.

In FIG. 7, all of the various elements, components, units/portions, and/or modules in the wireless devices 100 and 200 may be connected to each other through a wired interface or at least a part thereof may be wirelessly connected through the communication unit 110. For example, in each of the wireless devices 100 and 200, the control unit 120 and the communication unit 110 may be connected by wire and the control unit 120 and first units (e.g., 130 and 140) may be wirelessly connected through the communication unit 110. Each element, component, unit/portion, and/or module in the wireless devices 100 and 200 may further include one or more elements. For example, the control unit 120 may be configured with a set of one or more processors. For example, the control unit 120 may be configured with a set of a communication control processor, an application processor, an electronic control unit (ECU), a graphical processing unit, and a memory control processor. In another example, the memory 130 may be configured with a RAM, a dynamic RAM (DRAM), a ROM, a flash memory, a volatile memory, a non-volatile memory, and/or a combination thereof.

Example of vehicle or autonomous driving vehicle to which the present disclosure is applied

FIG. 8 illustrates a vehicle or an autonomous driving vehicle applied to the present disclosure. The vehicle or autonomous driving vehicle may be implemented as a mobile robot, a car, a train, a manned/unmanned aerial vehicle (AV), a ship, or the like.

Referring to FIG. 8, a vehicle or autonomous driving vehicle 100 may include an antenna unit 108, a communication unit 110, a control unit 120, a driving unit 140a, a power supply unit 140b, a sensor unit 140c, and an autonomous driving unit 140d. The antenna unit 108 may be configured as a part of the communication unit 110. The blocks 110/130/140a to 140d correspond to the blocks 110/130/140 of FIG. 7, respectively.

The communication unit 110 may transmit and receive signals (e.g., data and control signals) to and from external devices such as other vehicles, BSs (e.g., gNBs and road side units), and servers. The control unit 120 may perform various operations by controlling elements of the vehicle or the autonomous driving vehicle 100. The control unit 120 may include an ECU. The driving unit 140a may enable the vehicle or the autonomous driving vehicle 100 to drive on a road. The driving unit 140a may include an engine, a motor, a powertrain, a wheel, a brake, a steering device, and so on. The power supply unit 140b may supply power to the vehicle or the autonomous driving vehicle 100 and include a wired/wireless charging circuit, a battery, and so on. The sensor unit 140c may acquire information about a vehicle state, ambient environment information, user information, and so on. The sensor unit 140c may include an inertial measurement unit (IMU) sensor, a collision sensor, a wheel sensor, a speed sensor, a slope sensor, a weight sensor, a heading sensor, a position module, a vehicle forward/backward sensor, a battery sensor, a fuel sensor, a tire sensor, a steering sensor, a temperature sensor, a humidity sensor, an ultrasonic sensor, an illumination sensor, a pedal position sensor, and so on. The autonomous driving unit 140d may implement technology for maintaining a lane on which the vehicle is driving, technology for automatically adjusting speed, such as adaptive cruise control, technology for autonomously driving along a determined path, technology for driving by automatically setting a route if a destination is set, and the like.

For example, the communication unit 110 may receive map data, traffic information data, and so on from an external server. The autonomous driving unit 140d may generate an autonomous driving route and a driving plan from the obtained data. The control unit 120 may control the driving unit 140a such that the vehicle or autonomous driving vehicle 100 may move along the autonomous driving route according to the driving plan (e.g., speed/direction control). During autonomous driving, the communication unit 110 may aperiodically/periodically acquire recent traffic information data from the external server and acquire surrounding traffic information data from neighboring vehicles. During autonomous driving, the sensor unit 140c may obtain information about a vehicle state and/or surrounding environment information. The autonomous driving unit 140d may update the autonomous driving route and the driving plan based on the newly obtained data/information. The communication unit 110 may transfer information about a vehicle position, the autonomous driving route, and/or the driving plan to the external server. The external server may predict traffic information data using AI technology based on the information collected from vehicles or autonomous driving vehicles and provide the predicted traffic information data to the vehicles or the autonomous driving vehicles.

Those skilled in the art will appreciate that the present disclosure may be carried out in other specific ways than those set forth herein without departing from the spirit and essential characteristics of the present disclosure. The above embodiments are therefore to be construed in all aspects as illustrative and not restrictive. The scope of the disclosure should be determined by the appended claims and their legal equivalents, not by the above description, and all changes coming within the meaning and equivalency range of the appended claims are intended to be embraced therein.

[Industrial Applicability]

As described above, the present disclosure is applicable to various wireless communication systems.

**Claims**

1. A method of monitoring a control signal by a user equipment (UE) in a wireless communication system, the method comprising:

    configuring a set of serving cells; and
    monitoring, on a scheduling cell, specific physical downlink control channel (PDCCH) candidates for detection of specific downlink control information (DCI) for scheduling for the serving cells in the set of serving cells,
    wherein the specific DCI is used to schedule a plurality of channels in a plurality of cells, such that one channel is included per cell,
    wherein, based on that the scheduling cell is included in the set of serving cells, and that search space sets for the specific PDCCH candidates are provided for the scheduling cell only, a serving cell for counting the specific PDCCH candidates and a number of non-overlapping control channel elements (CCEs) corresponding to the specific PDCCH candidates is the scheduling cell.

2. The method of claim 1, wherein, based on that search space sets with same ID are provided for the scheduling cell and a specific serving cell from the set of serving cells for the specific DCI, the serving cell for counting the specific PDCCH candidates and the number of non-overlapping CCEs corresponding to the specific PDCCH candidates is the specific serving cell.

3. The method of claim 2, wherein, based on the counting of the specific PDCCH candidates and the number of non-overlapping CCEs corresponding to the specific PDCCH candidates, PDCCH candidates or non-overlapping CCEs more than a specific number within a specific time interval are not monitored.

4. The method of claim 1, wherein, based on that the scheduling cell is included in the set of serving cells, and that the search space sets for the specific PDCCH candidates are provided for the scheduling cell only, a serving cell for counting the number of sizes of the specific DCI is the scheduling cell.

5. The method of claim 4, wherein, based on that search space sets with same ID are provided for the scheduling cell and a specific serving cell from the set of serving cells for the specific DCI, a serving cell for counting the number of sizes of the specific DCI is the specific serving cell.

6. The method of claim 5, wherein, based on the counting of the number of sizes of the specific DCI, the number of different DCI sizes to be monitored per serving cell is limited.

7. A user equipment (UE) for monitoring a signal in a wireless communication system, comprising:

   at least one transceiver;
   at least one processor; and
   at least one memory operatively connected to the processor and storing instructions that, when executed, cause the processor to perform operations,
   wherein the operations comprise:

   configuring a set of serving cells; and
   monitoring, on a scheduling cell, specific physical downlink control channel (PDCCH) candidates for detection of specific downlink control information (DCI) for scheduling for the serving cells in the set of serving cells,
   wherein the specific DCI is used to schedule a plurality of channels in a plurality of cells, such that one channel is included per cell,
   wherein, based on that the scheduling cell is included in the set of serving cells, and that search space sets for the specific PDCCH candidates are provided for the scheduling cell only, a serving cell for counting the specific PDCCH candidates and a number of non-overlapping control channel elements (CCEs) corresponding to the specific PDCCH candidates is the scheduling cell.

8. The UE of claim 7, wherein, based on that search space sets with same ID are provided for the scheduling cell and a specific serving cell from the set of serving cells for the specific DCI, the serving cell for counting the specific PDCCH candidates and the number of non-overlapping CCEs corresponding to the specific PDCCH candidates is the specific serving cell.

9. The UE of claim 8, wherein, based on the counting of the specific PDCCH candidates and the number of non-overlapping CCEs corresponding to the specific PDCCH candidates, PDCCH candidates or non-overlapping CCEs more than a specific number within a specific time interval are not monitored.

10. The UE of claim 7, wherein, based on that the scheduling cell is included in the set of serving cells, and that the search space sets for the specific PDCCH candidates are provided for the scheduling cell only, a serving cell for counting the number of sizes of the specific DCI is the scheduling cell.

11. The UE of claim 10, wherein, based on that search space sets with same ID are provided for the scheduling cell and a specific serving cell from the set of serving cells for the specific DCI, a serving cell for counting the number of sizes of the specific DCI is the specific serving cell.

12. The UE of claim 11, wherein, based on the counting of the number of sizes of the specific DCI, the number of different DCI sizes to be monitored per serving cell is limited.

13. An apparatus for a user equipment (UE), comprising:

   at least one processor; and
   at least one computer memory operatively connected to the processor and configured to cause, when executed, the processor to perform operations, the operations comprising:

   configuring a set of serving cells, and
   monitoring, on a scheduling cell, specific physical downlink control channel (PDCCH) candidates for detection of specific downlink control information (DCI) for scheduling for the serving cells in the set of serving cells,
   wherein the specific DCI is used to schedule a plurality of channels in a plurality of cells, such that one channel is included per cell,
   wherein, based on that the scheduling cell is included in the set of serving cells, and that search space sets for the specific PDCCH candidates are provided for the scheduling cell only, a serving cell for counting the specific PDCCH candidates and a number of non-overlapping control channel elements (CCEs) corresponding to the specific PDCCH candidates is the scheduling cell.

14. A computer-readable non-volatile storage medium including at least one computer program that causes at least one processor to perform operations, the operations comprising:

configuring a set of serving cells, and

monitoring, on a scheduling cell, specific physical downlink control channel (PDCCH) candidates for detection of specific downlink control information (DCI) for scheduling for the serving cells in the set of serving cells,

wherein the specific DCI is used to schedule a plurality of channels in a plurality of cells, such that one channel is included per cell,

wherein, based on that the scheduling cell is included in the set of serving cells, and that search space sets for the specific PDCCH candidates are provided for the scheduling cell only, a serving cell for counting the specific PDCCH candidates and a number of non-overlapping control channel elements (CCEs) corresponding to the specific PDCCH candidates is the scheduling cell.

【Fig. 1】

【Fig. 2】

Resource grid

A carrier
(up to 3300 subcarriers, i. e., 275 RBs)

A BWP

1 RB = 12 subcarriers

1 RE

1 subcarrier

1 symbol

k = 0

l = 0 · · · ·

【Fig. 3】

【Fig. 4】

【Fig. 5】

<u>1</u>

【Fig. 6】

EP 4 598 212 A1

【Fig. 7】

## Device (100, 200)

| Communication unit (110)<br>(e.g., 5G communication unit) | Control unit (120)<br>(e.g., processor(s)) |
|---|---|
| Communication circuit (112)<br>(e.g., processor(s), memory(s)) | Memory unit (130)<br>(e.g., RAM, storage) |
| Transceiver(s) (114)<br>(e.g., RF unit(s), antenna(s)) | Additional components (140)<br>(e.g., power unit/battery, I/O unit,<br>driving unit, computing unit) |

【Fig. 8】

Vehicle or autonomous driving vehicle (100)

Communication unit (110)

Control unit (120)

Memory unit (130)

Driving unit (140a)

Power supply unit (140b)

Sensor unit (140c)

Autonomous driving unit (140d)

108

208

Device (100,200)

Communication unit (210)

Control unit (220)

Memory unit (230)

Driving unit (140a)

Power supply unit (140b)

Sensor unit (140c)

Autonomous driving unit (140d)

37

## INTERNATIONAL SEARCH REPORT

| International application No. |
|---|
| **PCT/KR2023/013828** |

### A. CLASSIFICATION OF SUBJECT MATTER

**H04W 72/23**(2023.01)i; **H04W 24/08**(2009.01)i; **H04L 1/00**(2006.01)i; **H04L 5/00**(2006.01)i; **H04W 72/12**(2009.01)i; **H04L 27/26**(2006.01)i

According to International Patent Classification (IPC) or to both national classification and IPC

### B. FIELDS SEARCHED

Minimum documentation searched (classification system followed by classification symbols)

H04W 72/23(2023.01); H04L 5/00(2006.01); H04W 72/12(2009.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: signal, monitoring, multi-cell scheduling, DCIF(m-cc DCI format), PDCCH, candidate, BD(blind decoding), serving, cell, scheduling cell, scheduled cell, non-overlapped CCE, number, SSS(search space set)

### C. DOCUMENTS CONSIDERED TO BE RELEVANT

| Category* | Citation of document, with indication, where appropriate, of the relevant passages | Relevant to claim No. |
|---|---|---|
| A | WO 2021-154054 A1 (LG ELECTRONICS INC.) 05 August 2021 (2021-08-05)<br>See paragraphs [0049]-[0186]; and figure 5. | 1-14 |
| A | WO 2021-151237 A1 (QUALCOMM INCORPORATED) 05 August 2021 (2021-08-05)<br>See paragraphs [0107]-[0123]; and figures 6-8. | 1-14 |
| A | APPLE INC. On multi-cell PUSCH/PDSCH scheduling with a single DCI. R1-2207349, 3GPP TSG RAN WG1 #110. Toulouse, France. 12 August 2022.<br>See section 2. | 1-14 |
| A | LANGBO. Discussions on multi-cell PUSCH/PDSCH scheduling with a single DCI. R1-2206103, 3GPP TSG RAN WG1 #110. Toulouse, France. 12 August 2022.<br>See sections 2-5. | 1-14 |
| A | NTT DOCOMO, INC. Discussion on multi-cell PUSCH/PDSCH scheduling with a single DCI. R1-2207424, 3GPP TSG RAN WG1 #110. Toulouse, France. 12 August 2022.<br>See section 2. | 1-14 |

☐ Further documents are listed in the continuation of Box C.  ☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| | |
|---|---|
| "T" | later document published after the international filing date or priority date and not in conflict with the application but cited to understand the principle or theory underlying the invention |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **27 December 2023** | **29 December 2023** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

## INTERNATIONAL SEARCH REPORT
### Information on patent family members

International application No.

**PCT/KR2023/013828**

| Patent document cited in search report | | | Publication date (day/month/year) | Patent family member(s) | | | Publication date (day/month/year) |
|---|---|---|---|---|---|---|---|
| WO | 2021-154054 | A1 | 05 August 2021 | KR | 10-2022-0133890 | A | 05 October 2022 |
| | | | | US | 2023-0070761 | A1 | 09 March 2023 |
| WO | 2021-151237 | A1 | 05 August 2021 | CN | 115211204 | A | 18 October 2022 |
| | | | | EP | 4098055 | A1 | 07 December 2022 |
| | | | | EP | 4098055 | A4 | 01 November 2023 |
| | | | | US | 2023-0085896 | A1 | 23 March 2023 |

Form PCT/ISA/210 (patent family annex) (July 2022)